(19) Europäisches Patentamt
European Patent Office
Office européen des brevets

(11) EP 3 596 142 B1

(12) EUROPEAN PATENT SPECIFICATION

(45) Date of publication and mention of the grant of the patent:
**24.05.2023 Bulletin 2023/21**

(21) Application number: **18716038.7**

(22) Date of filing: **14.03.2018**

(51) International Patent Classification (IPC):
***C08F 210/16*** *(2006.01)* ***C08F 4/64*** *(2006.01)*

(52) Cooperative Patent Classification (CPC):
(C-Sets available)
**C08F 297/083;** C08F 4/65908; C08F 4/65912; C08F 210/16; C08F 2410/01; C08F 2410/04

(Cont.)

(86) International application number:
**PCT/US2018/022331**

(87) International publication number:
**WO 2018/170056 (20.09.2018 Gazette 2018/38)**

(54) **CATALYST SYSTEM FOR MULTI-BLOCK COPOLYMER FORMATION**

KATALYSATORSYSTEM FÜR MEHRBLOCKCOPOLYMERBILDUNG

SYSTÈME CATALYTIQUE POUR FORMATION DE COPOLYMÈRE À BLOCS MULTIPLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.03.2017 US 201762471565 P**

(43) Date of publication of application:
**22.01.2020 Bulletin 2020/04**

(73) Proprietor: **Dow Global Technologies LLC**
**Midland, MI 48674 (US)**

(72) Inventors:
- **DEVORE, David D.**
  **Midland, MI 48674 (US)**
- **ARRIOLA, Daniel J.**
  **Midland, MI 48674 (US)**
- **ROOF, Gordon R.**
  **Midland, MI 48674 (US)**
- **MUNRO, Jeffrey C.**
  **Lake Jackson, TX 77566 (US)**
- **YOUNG, Andrew J.**
  **Lake Jackson, TX 77566 (US)**
- **CARNAHAN, Edmund M.**
  **Lake Jackson, TX 77566 (US)**

(74) Representative: **Boult Wade Tennant LLP**
**Salisbury Square House**
**8 Salisbury Square**
**London EC4Y 8AP (GB)**

(56) References cited:
**EP-A1- 2 436 703 US-A1- 2008 311 812**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/16, C08F 4/64048, C08F 4/64193;**
**C08F 210/16, C08F 4/64189;**
**C08F 210/16, C08F 4/64193;**
C08F 210/16, C08F 210/14, C08F 2500/08, C08F 2500/12, C08F 2500/03, C08F 2500/32, C08F 2500/33, C08F 2500/34;
C08F 210/16, C08F 210/14, C08F 2500/08, C08F 2500/12, C08F 2500/32, C08F 2500/33, C08F 2500/34

## Description

### Field

Embodiments relate to olefin polymerization catalysts, their manufacture, and the production of polyolefins using specific catalyst compositions, including the use of chain shuttling agents in the olefin polymerization process.

### Introduction

US 2008/311812 A1 relates to compositions for polymerizing propylene, 4-methyl-1-pentene, styrene, or another C4-8 [alpha]-olefin and one or more comonomers, to form an interpolymer product having unique physical properties, to a process for preparing such interpolymers, and to the resulting polymer products. EP 2436703 A1 relates to a comb architecture olefin block copolymer, a method of making the comb olefin block copolymer and blends comprising the comb olefin block copolymer.

The properties and applications of polyolefins depend to varying degrees upon the specific features of the catalysts used in their preparation. Specific catalyst compositions, activation conditions, steric and electronic features, and the like all can factor into the characteristics of the resulting polymer product. Indeed, a multitude of polymer features, such as co-monomer incorporation, molecular weight, polydispersity, long-chain branching, and the related physical properties (e.g., density, modulus, melt properties, tensile features, and optical properties), can all be affected by catalyst design.

In recent years, the use of well-defined molecular procatalysts generally has allowed enhanced control over polymer properties, including branching architecture, stereochemistry, and block copolymer construction. This latter aspect of polymer design, in which both "hard" (semicrystalline or high glass transition temperature) blocks and "soft" (low crystallinity or amorphous with low glass transition temperature) blocks are assembled in a polymer chain, has been especially challenging. Advances in block copolymer formation have been seen with the use of chain-shuttling agents (CSAs), which can exchange a growing polymer chain between different catalytic sites, such that portions of a single polymer molecule are synthesized by at least two different catalysts. In this manner, block copolymers can be prepared from a common monomer environment by using a mixture of catalysts of different selectivities, such as different stereoselectivities or monomer selectivities. Under the right conditions, efficient chain shuttling can produce a multi-block copolymer that features a random distribution of hard and soft blocks of random length.

Even with the advent of CSA and dual catalyst combinations in multi-block copolymer preparation processes, further improvements to said processes can be made. One improvement to said processes would be to elevate reactor temperatures, which would increase production rate and decrease energy consumption, while still producing desirable olefin block copolymer architecture with commercially acceptable catalyst efficiency and process control. Such an improvement has not been demonstrated in the state of the art.

### Summary

In a first aspect the invention provides an olefin polymerization catalyst system of claim 1, comprising an admixture or reaction product resulting from combining:

(A) a first olefin polymerization procatalyst,
(B) a second olefin polymerization procatalyst, and
(C) a chain shuttling agent,

wherein the first olefin polymerization procatalyst (A) is selected from the group consisting of:

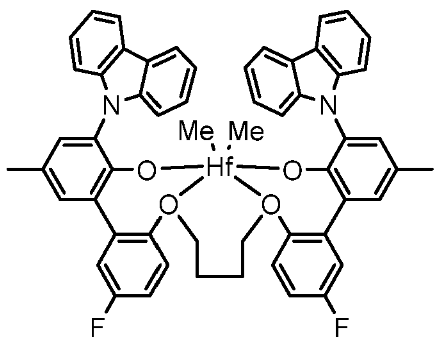

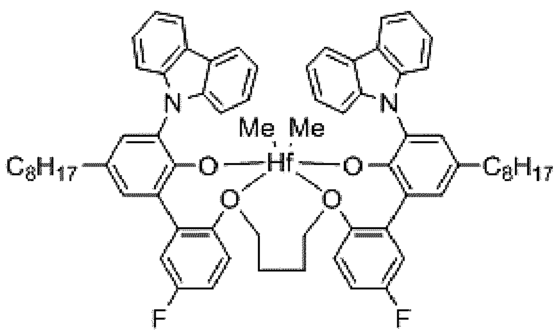

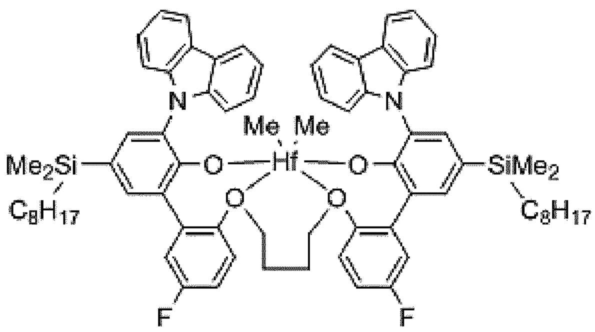

;

and

wherein the second olefin polymerization procatalyst (B) comprises a metal-ligand complex of Formula (II):

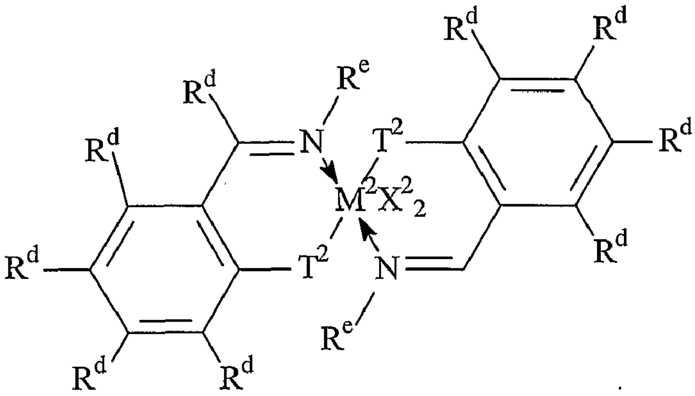

(II),

wherein:

$M^2$ is a Group 4 metal;
$T^2$ is a nitrogen, oxygen or phosphorus containing group;
$X^2$ is halo, hydrocarbyl, or hydrocarbyloxy;
$R^d$ independently at each occurrence is hydrogen, halogen, or $R^e$; and
$R^e$ independently at each occurrence is C1-20 hydrocarbyl or a heteroatom.

In a further aspect the invention provides a process as defined by claim 10, for preparing a multi-block copolymer comprising ethylene and a C3-8 alpha-olefin under addition polymerization conditions with the catalyst system as defined herein.

There is also disclosed a composition comprising an admixture or reaction product resulting from combining:

(A) a first olefin polymerization procatalyst,
(B) a second olefin polymerization procatalyst, and
(C) a chain shuttling agent,

wherein the first olefin polymerization procatalyst (A) comprises a metal-ligand complex of Formula (I):

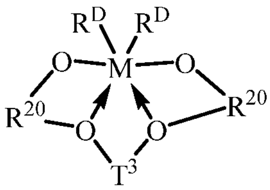

(I),

wherein:

M is zirconium or hafnium;
$R^{20}$ independently at each occurrence is a divalent aromatic or inertly substituted aromatic group containing from 5 to 20 atoms not counting hydrogen;
$T^3$ is a divalent hydrocarbon or silane group having from 3 to 20 atoms not counting hydrogen, or an inertly substituted derivative thereof;
$R^D$ independently at each occurrence is a monovalent ligand group of from 1 to 20 atoms, not counting hydrogen, or two $R^D$ groups together are a divalent ligand group of from 1 to 20 atoms, not counting hydrogen; and

wherein the second olefin polymerization procatalyst (B) comprises a metal-ligand complex of Formula (II):

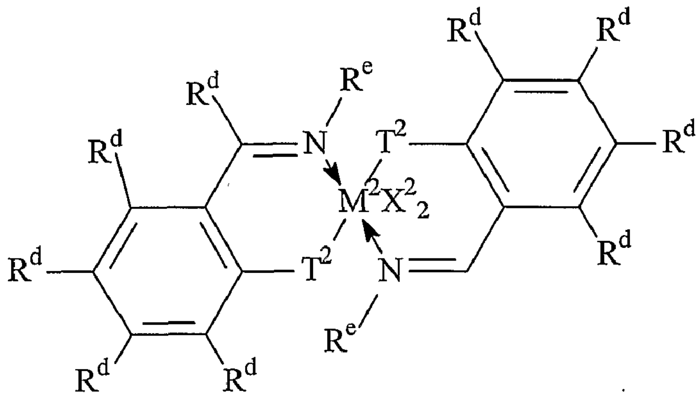
(II),

wherein:

$M^2$ is a Group 4 metal;
$T^2$ is a nitrogen, oxygen or phosphorus containing group;
$X^2$ is halo, hydrocarbyl, or hydrocarbyloxy;
$R^d$ independently at each occurrence is hydrogen, halogen, or $R^e$; and
$R^e$ independently at each occurrence is C1-20 hydrocarbyl or a heteroatom-, especially a F, N, S or P- substituted derivative thereof, more preferably C1-20 hydrocarbyl or a F or N substituted derivative thereof, most preferably alkyl, dialkylaminoalkyl, pyrrolyl, piperidenyl, perfluorophenyl, cycloalkyl, (poly)alkylaryl, or aralkyl.

There is also disclosed a composition for use in the polymerization of at least one addition polymerizable monomer to form a multi-block (segmented) copolymer, said copolymer containing therein two or more blocks or segments differing in one or more chemical or physical properties, the composition comprising an admixture or reaction product resulting from combining:

(A) a first olefin polymerization procatalyst,
(B) a second olefin polymerization procatalyst, and
(C) a chain shuttling agent,

wherein the first olefin polymerization procatalyst (A) comprises a metal-ligand complex of Formula (I), and wherein the second olefin polymerization procatalyst (B) comprises a metal-ligand complex of Formula (II).

There is also disclosed a composition for use in the polymerization of ethylene and at least one copolymerizable comonomer other than ethylene to form a multi-block (segmented) copolymer, said copolymer containing therein two or more blocks or segments differing in one or more chemical or physical properties, the composition comprising an admixture or reaction product resulting from combining:

(A) a first olefin polymerization procatalyst,
(B) a second olefin polymerization procatalyst, and
(C) a chain shuttling agent,

wherein the first olefin polymerization procatalyst (A) comprises a metal-ligand complex of Formula (I), and wherein the second olefin polymerization procatalyst (B) comprises a metal-ligand complex of Formula (II).

There is also disclosed an olefin polymerization catalyst system comprising:

(A) a first olefin polymerization procatalyst,
(B) a second olefin polymerization procatalyst, and
(C) a chain shuttling agent,

wherein the first olefin polymerization procatalyst (A) comprises a metal-ligand complex of Formula (I), and wherein the second olefin polymerization procatalyst (B) comprises a metal-ligand complex of Formula (II).

There is also disclosed a process for preparing a multi-block (segmented) copolymer, said process comprising contacting one or more addition polymerizable monomers under addition polymerizable conditions with a composition comprising an admixture or reaction product resulting from combining:

(A) a first olefin polymerization procatalyst,
(B) a second olefin polymerization procatalyst, and
(C) a chain shuttling agent,

wherein the first olefin polymerization procatalyst (A) comprises a metal-ligand complex of Formula (I), and wherein the second olefin polymerization procatalyst (B) comprises a metal-ligand complex of Formula (II).

There is also disclosed a process for preparing a multi-block (segmented) copolymer comprising ethylene and at least one copolymerizable comonomer other than ethylene, said process comprising contacting ethylene and one or more addition polymerizable monomers other than ethylene under addition polymerizable conditions with a composition comprising an admixture or reaction product resulting from combining:

(A) a first olefin polymerization procatalyst,
(B) a second olefin polymerization procatalyst, and
(C) a chain shuttling agent,

wherein the first olefin polymerization procatalyst (A) comprises a metal-ligand complex of Formula (I), and wherein the second olefin polymerization procatalyst (B) comprises a metal-ligand complex of Formula (II).

There is also disclosed a process for preparing a multi-block (segmented) copolymer, said process comprising contacting one or more addition polymerizable monomers under addition polymerizable conditions with an olefin polymerization catalyst system comprising:

(A) a first olefin polymerization procatalyst,
(B) a second olefin polymerization procatalyst, and
(C) a chain shuttling agent,

wherein the first olefin polymerization procatalyst (A) comprises a metal-ligand complex of Formula (I), and wherein the second olefin polymerization procatalyst (B) comprises a metal-ligand complex of Formula (II).

There is also disclosed a process for preparing a multi-block (segmented) copolymer comprising ethylene and at least one copolymerizable comonomer other than ethylene, said process comprising contacting ethylene and one or more addition polymerizable monomers other than ethylene under addition polymerizable conditions with an olefin polymerization catalyst system comprising:

(A) a first olefin polymerization procatalyst,
(B) a second olefin polymerization procatalyst, and
(C) a chain shuttling agent,

wherein the first olefin polymerization procatalyst (A) comprises a metal-ligand complex of Formula (I), and wherein the second olefin polymerization procatalyst (B) comprises a metal-ligand complex of Formula (II).

In certain embodiments, the foregoing processes take the form of continuous solution processes for forming block copolymers, such as multi-block copolymers (preferably linear multi-block copolymers of two or more monomers, especially ethylene and a $C_{3-20}$ olefin or cycloolefin, and most especially ethylene and a $C_{3-20}$ $\alpha$-olefin), using multiple catalysts that are incapable of interconversion. That is, the catalysts are chemically distinct. Under continuous solution polymerization conditions, the process is ideally suited for polymerization of mixtures of monomers at high monomer conversions. Under these polymerization conditions, shuttling from the chain shuttling agent to the catalyst becomes advantaged compared to chain growth, and multi-block copolymers, especially linear multi-block copolymers according to the present disclosure, are formed in high efficiency.

There is also disclosed a segmented copolymer (multi-block copolymer), especially a copolymer comprising ethylene in polymerized form, said copolymer containing therein two or more (preferably three or more) segments differing in comonomer content or density or other chemical or physical properties. The copolymer preferably possesses a molecular weight distribution, Mw/Mn, of equal to or less than 10.0 (e.g., equal to or less than 9.0, equal to or less than 8.0, equal to or less than 7.0, equal to or less than 6.0, equal to or less than 5.0, equal to or less than 4.0, equal to or less than 3.0, equal to or less than 2.8, etc.). Most preferably, the polymers of the present disclosure are ethylene multi-block copolymers.

There is also disclosed functionalized derivatives of the foregoing segmented or multi-block copolymers.

## Brief Description of the Drawings

FIG. 1 exemplifies the chain shuttling process that occurs in the polymerization processes of the present disclosure.

FIGS. 2A and 2B provides the TGIC for OBC resins prepared by inventive and comparative CSA and dual catalyst combinations from a 125 to 155 °C reactor temperature range.

FIGS. 3A and 3B provides the CEF for OBC resins prepared by inventive and comparative CSA and dual catalyst combinations from a 125 to 155 °C reactor temperature range.

FIGS. 4 and 5 relate to TGIC methodologies.

## Detailed Description

### *Definitions*

All references to the Periodic Table of the Elements refer to the Periodic Table of the Elements published and copyrighted by CRC Press, Inc., 2003. Also, any references to a Group or Groups shall be to the Group or Groups reflected in this Periodic Table of the Elements using the IUPAC system for numbering groups. Unless stated to the contrary, implicit from the context, or customary in the art, all parts and percents are based on weight and all test methods are current as of the filing date of this disclosure.

Number ranges in this disclosure and as they relate to the compositions disclosed herein are approximate, and thus may include values outside of the range unless otherwise indicated. Number ranges include all values from and including the lower and the upper values and include fractional numbers or decimals.

The terms "chain shuttling agent" and "chain transfer agent" refer to those known to one of ordinary skill in the art. Specifically, the term "shuttling agent" or "chain shuttling agent" refers to a compound or mixture of compounds that is capable of causing polymeryl transfer between various active catalyst sites under conditions of polymerization. That is, transfer of a polymer fragment occurs both to and from an active catalyst site in a facile and reversible manner. In contrast to a shuttling agent or chain shuttling agent, an agent that acts merely as a "chain transfer agent," such as some main-group alkyl compounds, may exchange, for example, an alkyl group on the chain transfer agent with the growing polymer chain on the catalyst, which generally results in termination of the polymer chain growth. In this event, the main-group center may act as a repository for a dead polymer chain, rather than engaging in reversible transfer with a catalyst site in the manner in which a chain shuttling agent does. Desirably, the intermediate formed between the chain shuttling agent and the polymeryl chain is not sufficiently stable relative to exchange between this intermediate and any other growing polymeryl chain, such that chain termination is relatively rare.

The term "procatalyst" or "catalyst precursor" used herein refers to a transition metal species that, once combined with an activator co-catalyst, is capable of polymerization of unsaturated monomers. For example, $Cp_2Zr(CH_3)_2$ is a catalyst precursor, which, when combined with an activating cocatalyst, becomes the active catalyst species "$Cp_2Zr(CH_3)^+$" which is capable of polymerization of unsaturated monomers. For the sake of simplicity, the terms "procatalysts," "transition metal catalysts," "transition metal catalyst precursors," "catalysts," "catalyst precursors," "polymerization catalysts or catalyst precursors," "metal complexes," "complexes," "metal-ligand complexes" and like terms are meant to be interchangeable in the present disclosure. Catalysts or procatalysts include those known in the art and

those disclosed in WO 2005/090426, WO 2005/090427, WO 2007/035485, WO 2009/012215, WO 2014/105411, U.S. Patent Publication Nos. 2006/0199930, 2007/0167578, 2008/0311812, and U.S. Patent Nos. 7,355,089 B2, 8,058,373 B2, and 8,785,554 B2.

"Co-catalyst" or "activator" refer to those known in the art, e.g., those disclosed in WO 2005/090427 and U.S. Patent No. 8,501,885 B2, that can activate a procatalyst by combining with or contacting the procatalyst to form an active catalyst composition.

The terms "addition polymerizable conditions," "polymerization conditions," and like terms refer to conditions known to one of ordinary skill in the art for polymerization of unsaturated monomers.

"Polymer" refers to a compound prepared by polymerizing monomers, whether of the same or a different type. The generic term polymer thus embraces the term homopolymer, usually employed to refer to polymers prepared from only one type of monomer, and the term interpolymer as defined below. It also embraces all forms of interpolymers, e.g., random, block, homogeneous, heterogeneous, etc. "Interpolymer" and "copolymer" refer to a polymer prepared by the polymerization of at least two different types of monomers. These generic terms include both classical copolymers, i.e., polymers prepared from two different types of monomers, and polymers prepared from more than two different types of monomers, e.g., terpolymers, tetrapolymers, etc. The term "polyethylene" includes homopolymers of ethylene and copolymers of ethylene and one or more C3-8 $\alpha$-olefins in which ethylene comprises at least 50 mole percent. The term "crystalline," if employed, refers to a polymer that possesses a first order transition or crystalline melting point (Tm) as determined by differential scanning calorimetry (DSC) or equivalent technique. The term may be used interchangeably with the term "semicrystalline". The term "amorphous" refers to a polymer lacking a crystalline melting point as determined by differential scanning calorimetry (DSC) or equivalent technique.

The terms "olefin block copolymer (OBC)," "block copolymer," "multi-block copolymer," and "segmented copolymer" refer to a polymer comprising two or more chemically distinct regions or segments (referred to as "blocks") preferably joined in a linear manner, that is, a polymer comprising chemically differentiated units which are joined (covalently bonded) end-to-end with respect to polymerized functionality, rather than in pendent or grafted fashion. The blocks may differ in the amount or type of comonomer incorporated therein, the density, the amount of crystallinity, the type of crystallinity (e.g., polyethylene versus polypropylene), the crystallite size attributable to a polymer of such composition, the type or degree of tacticity (isotactic or syndiotactic), regio- regularity or regio-irregularity, the amount of branching, including long chain branching or hyper-branching, the homogeneity, and/or any other chemical or physical property. For example, the olefin block copolymer may contain "hard blocks" (semicrystalline or high glass transition temperature) having lower comonomer content and "soft blocks" (low crystallinity or amorphous with low glass transition temperature) having higher comonomer content. Compared to block copolymers of the prior art, including copolymers produced by sequential monomer addition, fluxional catalysts, or anionic polymerization techniques, the block copolymers of the present disclosure are characterized by unique distributions of polymer polydispersity (PDI or Mw/Mn), block length distribution, and/or block number distribution, due, in a preferred embodiment, to the effect of the shuttling agent(s) in combination with catalysts. More specifically, when produced in a continuous process, the block copolymers desirably possess PDI from 1.0 to 10.0 (e.g., from 1.0 to 9.0, from 1.0 to 8.0, from 1.0 to 7.0, from 1.0 to 6.0, from 1.0 to 5.0, from 1.0 to 4.0, from 1.0 to 3.5, from 1.0 to 3.0, from 1.7 to 2.9, from 1.8 to 2.5, from 1.8 to 2.2, and/or from 1.8 to 2.1). When produced in a batch or semi-batch process, the block polymers desirably possess PDI from 1.0 to 10.0 (e.g., from 1.0 to 9.0, from 1.0 to 8.0, from 1.0 to 7.0, from 1.0 to 6.0, from 1.0 to 5.0, from 1.0 to 4.0, from 1.0 to 3.5, from 1.0 to 3.0, from 1.7 to 2.9, from 1.8 to 2.5, from 1.8 to 2.2, and/or from 1.8 to 2.1).

The term "ethylene multi-block copolymer" means a multi-block copolymer comprising ethylene and one or more copolymerizable comonomers, wherein ethylene comprises a plurality of the polymerized monomer units of at least one block or segment in the polymer, preferably at least 90 mole percent, more preferably at least 95 mole percent, and most preferably at least 98 mole percent of said block. Based on total polymer weight, the ethylene multi-block copolymers of the present disclosure preferably have an ethylene content from 25 to 97 weight percent, more preferably from 40 to 96 weight percent, even more preferably from 55 to 95 percent weight, and most preferably from 65 to 85 weight percent.

Because the respective distinguishable segments or blocks formed from two of more monomers are joined into single polymer chains, the polymer cannot be completely fractionated using standard selective extraction techniques. For example, polymers containing regions that are relatively crystalline (high density segments) and regions that are relatively amorphous (lower density segments) cannot be selectively extracted or fractionated using differing solvents. In a preferred embodiment, the quantity of extractable polymer using either a dialkyl ether- or an alkane- solvent is less than 10 percent, preferably less than 7 percent, more preferably less than 5 percent and most preferably less than 2 percent of the total polymer weight.

In addition, the multi-block copolymers of the present disclosure desirably possess a PDI fitting a Schulz-Flory distribution rather than a Poisson distribution. The use of the present polymerization process results in a product having both a polydisperse block distribution as well as a polydisperse distribution of block sizes. This results in the formation of polymer products having improved and distinguishable physical properties. The theoretical benefits of a polydisperse

block distribution have been previously modeled and discussed in Potemkin, Physical Review E (1998) 57(6), pp. 6902-6912, and Dobrynin, J. Chem. Phvs. (1997) 107(21), pp. 9234-9238.

In a further embodiment, the polymers of the present disclosure, especially those made in a continuous, solution polymerization reactor, possess a most probable distribution of block lengths. Exemplary copolymers according to the present disclosure are multi-block copolymers containing 4 or more blocks or segments including terminal blocks.

The following mathematical treatment of the resulting polymers is based on theoretically derived parameters that are believed to apply to the presently disclosed polymers and demonstrate that, especially in a steady-state, continuous, well-mixed reactor, the block lengths of the resulting polymer prepared using 2 or more catalysts will each conform to a most probable distribution, derived in the following manner, wherein $p_i$ is the probability of propagation with respect to block sequences from catalyst i. The theoretical treatment is based on standard assumptions and methods known in the art and used in predicting the effects of polymerization kinetics on molecular architecture, including the use of mass action reaction rate expressions that are not affected by chain or block lengths. Such methods have been previously disclosed in W. H. Ray, J. Macromol. Sci., Rev. Macromol. Chem., C8, 1 (1972) and A. E. Hamielec and J. F. MacGregor, "Polymer Reaction Engineering", K.H. Reichert and W. Geisler, Eds., Hanser, Munich, 1983. In addition, it is assumed that adjacent sequences formed by the same catalyst form a single block. For catalyst i, the fraction of sequences of length n is given by $X_i[n]$, where n is an integer from 1 to infinity representing the number of monomer units in the block.

$$X_i[n] = (1-p_i)\, p_i^{(n-1)}$$

most probable distribution of block lengths

$$N_i = \frac{1}{1-p_i}$$

number average block length

Each catalyst has a probability of propagation ($p_i$) and forms a polymer segment having a unique average block length and distribution. In a most preferred embodiment, the probability of propagation is defined as:

$$p_i = \frac{Rp[i]}{Rp[i] + Rt[i] + Rs[i] + [C_i]}$$

for each catalyst i = {1,2...}, where,

Rp[i] = Rate of monomer consumption by catalyst i, (moles/L),
Rt[i] = Total rate of chain transfer and termination for catalyst i, (moles/L),
Rs[i] = Rate of chain shuttling with dormant polymer to other catalysts, (moles/L), and
[Ci] = Concentration of catalyst i (moles/L).

Dormant polymer chains refers to polymer chains that are attached to a CSA. The overall monomer consumption or polymer propagation rate, Rp[i], is defined using an apparent rate constant, $\overline{k_{pi}}$, multiplied by a total monomer concentration, [M], as follows:

$$Rp[i] = \theta\, \overline{k_{pi}}\, [M][C_i].$$

The total chain transfer rate is given below including values for chain transfer to hydrogen ($H_2$), beta hydride elimination, and chain transfer to chain shuttling agent (CSA). The reactor residence time is given by $\theta$ and each subscripted k value is a rate constant.

$$Rt[i] = \theta\, k_{H2i}[H_2][C_i] + \theta\, k_{\beta i}[C_i] + \theta\, k_{ai}[CSA][C_i]$$

For a dual catalyst system, the rate of chain shuttling of polymer between catalysts 1 and 2 is given as follows:

$$Rs[1] = Rs[2] = \theta\, k_{a1}[CSA]\ \theta\, k_{a2}[C_1]\ [C_2].$$

If more than 2 catalysts are employed, then added terms and complexity in the theoretical relation for Rs[i] result, but the ultimate conclusion that the resulting block length distributions are most probable is unaffected.

As used herein with respect to a chemical compound, unless specifically indicated otherwise, the singular includes all isomeric forms and vice versa (for example, "hexane," includes all isomers of hexane individually or collectively). The terms "compound" and "complex" are used interchangeably herein to refer to organic-, inorganic- and organometal compounds. The term "atom" refers to the smallest constituent of an element regardless of ionic state, that is, whether or not the same bears a charge or partial charge or is bonded to another atom. The term "heteroatom" refers to an atom other than carbon or hydrogen. Preferred heteroatoms include: F, Cl, Br, N, O, P, B, S, Si, Sb, Al, Sn, As, Se and Ge.

The term "hydrocarbyl" refers to univalent substituents containing only hydrogen and carbon atoms, including branched or unbranched, saturated or unsaturated, cyclic, polycyclic or noncyclic species. Examples include alkyl-, cycloalkyl-, alkenyl-, alkadienyl-, cycloalkenyl-, cycloalkadienyl-, aryl-, and alkynyl- groups. "Substituted hydrocarbyl" refers to a hydrocarbyl group that is substituted with one or more nonhydrocarbyl substituent groups. The terms "heteroatom containing hydrocarbyl" or "heterohydrocarbyl" refer to univalent groups in which at least one atom other than hydrogen or carbon is present along with one or more carbon atom and one or more hydrogen atoms. The term "heterocarbyl" refers to groups containing one or more carbon atoms and one or more heteroatoms and no hydrogen atoms. The bond between the carbon atom and any heteroatom, as well as the bonds between any two heteroatoms, may be a single or multiple covalent bond or a coordinating or other donative bond. Thus, an alkyl group substituted with a heterocycloalkyl-, aryl- substituted heterocycloalkyl-, heteroaryl-, alkyl- substituted heteroaryl-, alkoxy-, aryloxy-, dihydrocarbylboryl-, dihydrocarbylphosphino-, dihydrocarbylamino-, trihydrocarbylsilyl-, hydrocarbylthio-, or hydrocarbylseleno- group is within the scope of the term heteroalkyl. Examples of suitable heteroalkyl groups include cyanomethyl-, benzoylmethyl-, (2- pyridyl)methyl-, and trifluoromethyl- groups.

As used herein, the term "aromatic" refers to a polyatomic, cyclic, conjugated ring system containing $(4\delta+2)$ $\pi$-electrons, wherein $\delta$ is an integer greater than or equal to 1. The term "fused" as used herein with respect to a ring system containing two or more polyatomic, cyclic rings means that with respect to at least two rings thereof, at least one pair of adjacent atoms is included in both rings. The term "aryl" refers to a monovalent aromatic substituent which may be a single aromatic ring or multiple aromatic rings which are fused together, linked covalently, or linked to a common group such as a methylene or ethylene moiety. Examples of aromatic ring(s) include phenyl, naphthyl, anthracenyl, and biphenyl, among others.

"Substituted aryl" refers to an aryl group in which one or more hydrogen atoms bound to any carbon is replaced by one or more functional groups such as alkyl, substituted alkyl, cycloalkyl, substituted cycloalkyl, heterocycloalkyl, substituted heterocycloalkyl, halogen, alkylhalos (e.g., $CF_3$), hydroxy, amino, phosphido, alkoxy, amino, thio, nitro, and both saturated and unsaturated cyclic hydrocarbons which are fused to the aromatic ring(s), linked covalently or linked to a common group such as a methylene or ethylene moiety. The common linking group may also be a carbonyl as in benzophenone or oxygen as in diphenylether or nitrogen in diphenylamine.

For copolymers produced by a given catalyst, the relative amounts of comonomer and monomer in the copolymer and hence the copolymer composition is determined by relative rates of reaction of comonomer and monomer. Mathematically the molar ratio of comonomer to monomer is given by

$$\frac{F_2}{F_1} = \left(\frac{[comonomer]}{[monomer]}\right)_{polymer} = \frac{R_{p2}}{R_{p1}} \quad (1)$$

Here $R_{p2}$ and $R_{p1}$ are the rates of polymerization of comonomer and monomer respectively and $F_2$ and $F_1$ are the mole fractions of each in the copolymer. Because $F_2 + F_1 = 1$ we can rearrange this equation to

$$F_2 = \frac{R_{p2}}{R_{p1} + R_{p2}} \quad (2)$$

The individual rates of polymerization of comonomer and monomer are typically complex functions of temperature, catalyst, and monomer/comonomer concentrations. In the limit as comonomer concentration in the reaction media drops to zero, $R_{p2}$ drops to zero, $F_2$ becomes zero and the polymer consists of pure monomer. In the limiting case of

no monomer in the reactor, $R_{p1}$ becomes zero and $F_2$ is one (provided the comonomer can polymerize alone).

For most homogeneous catalysts, the ratio of comonomer to monomer in the reactor largely determines polymer composition as determined according to either the Terminal Copolymerization Model or the Penultimate Copolymerization Model.

For random copolymers in which the identity of the last monomer inserted dictates the rate at which subsequent monomers insert, the terminal copolymerization model is employed. In this model, insertion reactions of the type

$$\cdots M_i C^* + M_j \xrightarrow{k_{ij}} \cdots M_i M_j C^* \quad (3)$$

Where $C^*$ represents the catalyst, $M_i$ represents monomer $i$, and $k_{ij}$ is the rate constant having the rate equation

$$R_{p_{ij}} = k_{ij} \left[ \cdots M_i C^* \right] \left[ M_j \right] \quad (4)$$

The comonomer mole fraction (i=2) in the reaction media is defined by the equation:

$$f_2 = \frac{[M_2]}{[M_1]+[M_2]} \quad (5)$$

A simplified equation for comonomer composition can be derived as disclosed in George Odian, Principles of Polymerization, Second Edition, John Wiley and Sons, 1970, as follows:

$$F_2 = \frac{r_1(1-f_2)^2 + (1-f_2)f_2}{r_1(1-f_2)^2 + 2(1-f_{2)})f_2 + r_2 f_2^2} \quad (6).$$

From this equation, the mole fraction of comonomer in the polymer is solely dependent on the mole fraction of comonomer in the reaction media and two temperature dependent reactivity ratios defined in terms of the insertion rate constants as:

$$r_1 = \frac{k_{11}}{k_{12}} \qquad r_2 = \frac{k_{22}}{k_{21}} \quad (7).$$

Alternatively, in the penultimate copolymerization model, the identities of the last two monomers inserted in the growing polymer chain dictate the rate of subsequent monomer insertion. The polymerization reactions are of the form

$$\cdots M_i M_j C^* + M_k \xrightarrow{k_{ijk}} \cdots M_i M_j M_k C^* \quad (8)$$

and the individual rate equations are:

$$R_{p_{ijk}} = k_{ijk} \left[ \cdots M_i M_j = C^* \right] \left[ M_k \right] \quad (9).$$

The comonomer content can be calculated (again as disclosed in George Odian, Supra.) as:

$$\frac{(1-F_2)}{F_2}=\frac{1+\dfrac{r'_1X(r_1X+1)}{(r'_1X+1)}}{1+\dfrac{r'_2(r_2+X)}{X(r'_2+X)}}\quad(10)$$

where X is defined as:

$$X=\frac{(1-f_2)}{f_2}\quad(11)$$

and the reactivity ratios are defined as:

$$r_1=\frac{k_{111}}{k_{112}}\quad r'_1=\frac{k_{211}}{k_{212}}$$
$$r_2=\frac{k_{222}}{k_{221}}\quad r'_2=\frac{k_{122}}{k_{121}}\quad(12).$$

For this model as well, the polymer composition is a function only of temperature dependent reactivity ratios and comonomer mole fraction in the reactor. The same is also true when reverse comonomer or monomer insertion may occur or in the case of the interpolymerization of more than two monomers.

Reactivity ratios for use in the foregoing models may be predicted using well known theoretical techniques or empirically derived from actual polymerization data. Suitable theoretical techniques are disclosed, for example, in B. G. Kyle, Chemical and Process Thermodynamics, Third Addition, Prentice-Hall, 1999 and in Redlich-Kwong-Soave (RKS) Equation of State, Chemical Engineering Science, 1972, pp. 1197-1203. Commercially available software programs may be used to assist in deriving reactivity ratios from experimentally derived data. One example of such software is Aspen Plus from Aspen Technology, Inc., Ten Canal Park, Cambridge, MA 02141-2201 USA.

Based on the foregoing theoretical considerations, the present disclosure may alternatively be related to a composition or catalyst system for use in the polymerization of two or more addition polymerizable monomers, especially ethylene and at least one copolymerizable comonomer, to form a high molecular weight, segmented copolymer (multi-block copolymer), said copolymer containing therein two or more (preferably three or more) segments or blocks differing in one or more chemical or physical properties as further disclosed herein, the catalyst system or composition comprising the admixture or reaction product resulting from combining:

(A) a first olefin polymerization procatalyst,
(B) a second olefin polymerization procatalyst capable of preparing polymers differing in chemical or physical properties from the polymer prepared by the first olefin polymerization procatalyst (A) under equivalent polymerization conditions, and
(C) a chain shuttling agent; and

wherein the:

$r_1$ of the first olefin polymerization procatalyst ($r_{1A}$), and
$r_1$ of the second olefin polymerization procatalyst ($r_{1B}$),
are selected such that the ratio of the reactivity ratios ($r_{1A}$ / $r_{1B}$) under the polymerization conditions is 0.5 or less (e.g., 0.25 or less, 0.125 or less, 0.08 or less, 0.04 or less).

Additionally, there is now provided a process, preferably a solution process (and most preferably a continuous solution process), for use in the polymerization of two or more addition polymerizable monomers (especially ethylene and at least one copolymerizable comonomer) to form a high molecular weight, segmented copolymer (multi-block

copolymer), said copolymer containing therein two or more (preferably three or more) segments or blocks differing in one or more chemical or physical properties as further disclosed herein, the process comprising the steps of combining two or more addition polymerizable monomers (especially ethylene and at least one copolymerizable comonomer) under polymerization conditions with the catalyst system or composition comprising the admixture or reaction product resulting from combining:

(A) a first olefin polymerization procatalyst,
(B) a second olefin polymerization procatalyst capable of preparing polymers differing in chemical or physical properties from the polymer prepared by the first olefin polymerization procatalyst (A) under equivalent polymerization conditions, and
(C) a chain shuttling agent; and

wherein the:

$r_1$ of the first olefin polymerization procatalyst ($r_{1A}$), and
$r_1$ of the second olefin polymerization procatalyst ($r_{1B}$),
are selected such that the ratio of the reactivity ratios ($r_{1A}$ / $r_{1B}$) under the polymerization conditions is 0.5 or less (e.g., 0.25 or less, 0.125 or less, 0.08 or less, 0.04 or less).

Further, there is now provided a composition or catalyst system for use in the polymerization of two or more addition polymerizable monomers (referred to as monomer and comonomer(s) respectively), especially ethylene and at least one copolymerizable comonomer, to form a high molecular weight, segmented copolymer (multi-block copolymer), said copolymer containing therein two or more (preferably three or more) segments or blocks differing in one or more chemical or physical properties as further disclosed herein, the catalyst system or composition comprising the admixture or reaction product resulting from combining:

(A) a first olefin polymerization procatalyst,
(B) a second olefin polymerization procatalyst capable of preparing polymers differing in chemical or physical properties from the polymer prepared by the first olefin polymerization procatalyst (A) under equivalent polymerization conditions, and
(C) a chain shuttling agent; wherein:

the comonomer content in mole percent of the copolymer resulting from the first olefin polymerization procatalyst (Fi), and
the comonomer content in mole percent of the copolymer resulting from the second olefin polymerization procatalyst ($F_2$),
are selected such that the ratio ($F_1$ / $F_2$) under the polymerization conditions is 2 or more (e.g., 4 or more, 10 or more, 15 or more, and 20 or more).

Additionally, there is now provided a process, preferably a solution process (more preferably a continuous solution process), for use in the polymerization of two or more addition polymerizable monomers (referred to as monomer and comonomer(s) respectively), especially ethylene and at least one copolymerizable comonomer, to form a high molecular weight, segmented copolymer (multi-block copolymer), said copolymer containing therein two or more (preferably three or more) segments or blocks differing in one or more chemical or physical properties as further disclosed herein, the process comprising the steps of combining under polymerization conditions:

(A) a first olefin polymerization procatalyst,
(B) a second olefin polymerization procatalyst capable of preparing polymers differing in chemical or physical properties from the polymer prepared by the first olefin polymerization procatalyst (A) under equivalent polymerization conditions, and
(C) a chain shuttling agent; wherein:

the comonomer content in mole percent of the copolymer resulting from the first olefin polymerization procatalyst ($F_1$), and
the comonomer content in mole percent of the copolymer resulting from the second olefin polymerization procatalyst ($F_2$),
are selected such that the ratio ($F_1$ / $F_2$) under the polymerization conditions is 2 or more (e.g., 4 or more, 10 or more, 15 or more, and 20 or more, and

recovering the polymer product.

*Monomers*

Suitable monomers for use in preparing the olefin block copolymers or multi-block copolymers of the present disclosure include ethylene and one or more addition polymerizable monomers (i.e., comonomers) other than ethylene. Examples of suitable comonomers include straight-chain or branched α-olefins of 3 to 30, preferably 3 to 20, carbon atoms, such as propylene, 1-butene, 1-pentene, 3 -methyl- 1-butene, 1-hexene, 4-methyl-l- pentene, 3 -methyl- 1-pentene, 1-octene, 1-decene, 1-dodecene, 1-tetradecene, 1-hexadecene, 1- octadecene and 1-eicosene; cycloolefins of 3 to 30, preferably 3 to 20 carbon atoms, such as cyclopentene, cycloheptene, norbornene, 5-methyl-2-norbornene, tetracyclododecene, and 2-methyl- 1,4,5, 8-dimethano-1,2,3,4,4a,5,8,8a-octahydronaphthalene; di- and poly-olefins, such as butadiene, isoprene, 4-methyl- 1,3-pentadiene, 1,3-pentadiene, 1,4-pentadiene, 1,5-hexadiene, 1,4-hexadiene, 1,3-hexadiene, 1,3-octadiene, 1,4-octadiene, 1,5-octadiene, 1,6-octadiene, 1,7-octadiene, ethylidene norbornene, vinyl norbornene, dicyclopentadiene, 7-methyl- 1,6-octadiene, 4-ethylidene-8-methyl- 1,7-nonadiene, and 5,9-dimethyl,4,8-decatriene; aromatic vinyl compounds such as mono or poly alkylstyrenes (including styrene, o-methylstyrene, m-methylstyrene, p-methylstyrene, o,p- dimethylstyrene, o-ethylstyrene, m-ethylstyrene and p-ethylstyrene), and functional group- containing derivatives, such as methoxystyrene, ethoxystyrene, vinylbenzoic acid, methyl vinylbenzoate, vinylbenzyl acetate, hydroxystyrene, o-chlorostyrene, p-chlorostyrene, divinylbenzene, 3-phenylpropene, 4-phenylpropene, α-methylstyrene, vinylchloride, 1,2- difluoroethylene, 1,2-dichloroethylene, tetrafluoroethylene, and 3,3,3-trifluoro-l-propene.

*Chain Shuttling Agents (CSA's)*

The term "shuttling agent" refers to a compound or mixture of compounds employed in the composition/catalyst system/process of the present disclosure that is capable of causing polymeryl exchange between at least two active catalyst sites of the catalysts included in the composition/catalyst system/process under the conditions of the polymerization. That is, transfer of a polymer fragment occurs both to and from one or more of the active catalyst sites. In contrast to a shuttling agent, a "chain transfer agent" causes termination of polymer chain growth and amounts to a one-time transfer of growing polymer from the catalyst to the transfer agent. Preferably, the shuttling agent has an activity ratio $R_{A\text{-}B}/R_{B\text{-}A}$ of from 0.01 and 100, more preferably from 0.1 to 10, most preferably from 0.5 to 2.0, and most highly preferably from 0.8 to 1.2, wherein $R_{A\text{-}B}$ is the rate of polymeryl transfer from catalyst A active site to catalyst B active site via the shuttling agent, and $R_{B\text{-}A}$ is the rate of reverse polymeryl transfer, i.e., the rate of exchange starting from the catalyst B active site to catalyst A active site via the shuttling agent. Desirably, the intermediate formed between the shuttling agent and the polymeryl chain is sufficiently stable such that chain termination is relatively rare. Desirably, less than 90 percent, preferably less than 75 percent, more preferably less than 50 percent and most desirably less than 10 percent of shuttle-polymeryl products are terminated prior to attaining 3 distinguishable polymer segments or blocks. Ideally, the rate of chain shuttling (defined by the time required to transfer a polymer chain from a catalyst site to the chain shuttling agent and then back to a catalyst site) is similar to or faster than the rate of polymer termination, even up to 10 or even 100 times faster than the rate of polymer termination. This permits polymer block formation on the same time scale as polymer propagation.

Suitable chain shuttling agents for use herein include Group 1, 2, 12 or 13 metal compounds or complexes containing at least one $C_{1\text{-}20}$ hydrocarbyl group, preferably hydrocarbyl substituted magnesium, aluminum, gallium or zinc compounds containing from 1 to 12 carbons in each hydrocarbyl group, and reaction products thereof with a proton source. Preferred hydrocarbyl groups are alkyl groups, preferably linear or branched, $C_{2\text{-}8}$ alkyl groups. Most preferred shuttling agents for use in the present invention are trialkyl aluminum and dialkyl zinc compounds, especially triethylaluminum, tri(i-propyl) aluminum, tri(i-butyl)aluminum, tri(n-hexyl)aluminum, tri(n-octyl)alummum, triethylgallium, or diethylzinc. Additional suitable shuttling agents include the reaction product or mixture formed by combining the foregoing organometal compounds, preferably a tri($C_{1\text{-}8}$) alkyl aluminum or di($C_{1\text{-}8}$) alkyl zinc compound, especially triethylaluminum, tri(i-propyl) aluminum, tri(i-butyl)aluminum, tri(n-hexyl)aluminum, tri(n-octyl)aluminum, or diethylzinc, with less than a stoichiometric quantity (relative to the number of hydrocarbyl groups) of a secondary amine or a hydroxyl compound, especially bis(trimethylsilyl)amine, t-butyl(dimethyl)siloxane, 2- hydroxymethylpyridine, di(n-pentyl)amine, 2,6-di(t-butyl)phenol, ethyl(l-naphthyl)amine, bis(2,3,6,7-dibenzo-l-azacycloheptaneamine), or 2,6-diphenylphenol. Sufficient amine or hydroxyl reagent is used such that one hydrocarbyl group remains per metal atom. The primary reaction products of the foregoing combinations most useful in the present disclosure as shuttling agents are n-octylaluminum di(bis(trimethylsilyl)amide), i-propylaluminum bis(dimethyl(t-butyl)siloxide), and n-octylaluminum di(pyridinyl-2-methoxide), i-butylaluminum bis(dimethyl(t-butyl)siloxane), i-butylaluminum bis(di(trimethylsilyl)amide), n-octylaluminum di(pyridine-2-methoxide), i-butylaluminum bis(di(n-pentyl)amide), n-octylaluminum bis(2,6-di-t- butylphenoxide), n-octylaluminum di(ethyl(l-naphthyl)amide), ethylaluminum bis(t- butyldimethylsiloxide), ethylaluminum di(bis(trimethylsilyl)amide), ethylaluminum bis(2,3,6,7- dibenzo-1-azacycloheptaneamide), n-octylaluminum bis(2,3,6,7-dibenzo-l-azacycloheptaneamide), n-octylaluminum bis(dimethyl(t-butyl)siloxide, ethylzinc (2,6-diphenylphenoxide), and ethylzinc (t-butoxide).

In further embodiments of the present disclosure, suitable chain shuttling agents include metal alkyls containing a divalent metal (e.g., Zn), a trivalent metal (e.g., Al), or a mixture of divalent metal and trivalent metal. In certain embodiments, the chain shuttling agent is a divalent metal alkyl, such as dialkylzinc. In certain embodiments, the chain shuttling agent is a trivalent metal alkyl, such as trialkylaluminum. In certain embodiments, the organometallic compound is a mixture of divalent metal alkyl (e.g., dialkylzinc) and trivalent metal alkyl (e.g., trialkylaluminum). In certain embodiments, the chain shuttling agent is a mixture of trivalent metal and divalent metal at a trivalent/divalent metal ratio from 99:1 to 1:99 (e.g., from 95:5 to 50:50, from 90:10 to 80:20, from 90:10 to 70:30, etc.). In certain embodiments, the chain shuttling agent is a metal alkyl containing a mixture of aluminum and zinc metals at an aluminum/zinc ratio from 99:1 to 1:99 (e.g., from 95:5 to 50:50, from 90:10 to 80:20, from 90:10 to 70:30, etc.).

It will be appreciated by the skilled artisan that a suitable shuttling agent for one catalyst or catalyst combination may not necessarily be as good or even satisfactory for use with a different catalyst or catalyst combination. Some potential shuttling agents may adversely affect the performance of one or more catalysts and may be undesirable for use for that reason as well. Accordingly, the activity of the chain shuttling agent desirably is balanced with the catalytic activity of the catalysts to achieve the desired polymer properties. In some embodiments of the present disclosure, best results may be obtained by use of shuttling agents having a chain shuttling activity (as measured by a rate of chain transfer) that is less than the maximum possible rate.

Generally however, preferred shuttling agents possess the highest rates of polymer transfer as well as the highest transfer efficiencies (reduced incidences of chain termination). Such shuttling agents may be used in reduced concentrations and still achieve the desired degree of shuttling. In addition, such shuttling agents result in production of the shortest possible polymer block lengths. Highly desirably, chain shuttling agents with a single exchange site are employed due to the fact that the effective molecular weight of the polymer in the reactor is lowered, thereby reducing viscosity of the reaction mixture and consequently reducing operating costs.

*First Olefin Polymerization Procatalyst (A)*

The first olefin polymerization procatalyst (A) is selected from the group consisting of:

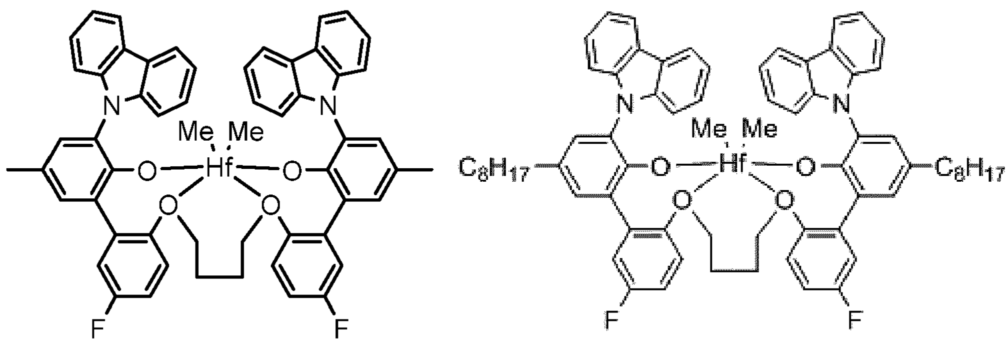

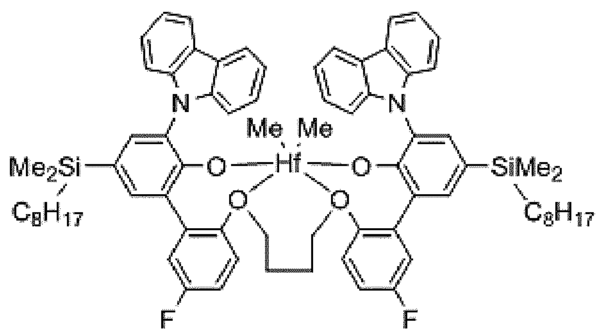

.

Suitable procatalysts that would fall within the scope of the first olefin polymerization procatalyst (A) of the present disclosure include the catalysts/complexes discussed below that are adapted for preparing polymers of the desired composition or type and capable of reversible chain transfer with a chain shuttling agent. As noted above, the terms "procatalysts," "catalysts," "metal complexes," and "complexes" used herein are to be interchangeable. In certain

embodiments, the first olefin polymerization procatalyst (A) is the soft block/segment catalyst (i.e., high comonomer incorporator) of the olefin block copolymers of the present disclosure.

,The foregoing metal complexes may be conveniently prepared by standard metallation and ligand exchange procedures involving a source of the transition metal and a neutral polyfunctional ligand source. The techniques employed are the same as or analogous to those disclosed in USP 6,827,976 and US2004/0010103, and elsewhere.

The metal complex is activated to form the active catalyst composition by combination with the cocatalyst. The activation may occur prior to addition of the catalyst composition to the reactor with or without the presence of other components of the reaction mixture, or *in situ* through separate addition of the metal complex and activating cocatalyst to the reactor.

The foregoing polyvalent Lewis base complexes are conveniently prepared by standard metallation and ligand exchange procedures involving a source of the Group 4 metal and the neutral polyfunctional ligand source. In addition, the complexes may also be prepared by means of an amide elimination and hydrocarbylation process starting from the corresponding Group 4 metal tetraamide and a hydrocarbylating agent, such as trimethylaluminum. Other techniques may be used as well. These complexes are known from the disclosures of, among others, US patents 6,320,005, 6,103,657, WO 02/38628, WO 03/40195, and US 04/0220050.

Catalysts having high comonomer incorporation properties are also known to reincorporate in situ prepared long chain olefins resulting incidentally during the polymerization through β- hydride elimination and chain termination of growing polymer, or other process. The concentration of such long chain olefins is particularly enhanced by use of continuous solution polymerization conditions at high conversions, especially ethylene conversions of 95 percent or greater, more preferably at ethylene conversions of 97 percent or greater. Under such conditions a small but detectable quantity of olefin terminated polymer may be reincorporated into a growing polymer chain, resulting in the formation of long chain branches, that is, branches of a carbon length greater than would result from other deliberately added comonomer. Moreover, such chains reflect the presence of other comonomers present in the reaction mixture. That is, the chains may include short chain or long chain branching as well, depending on the comonomer composition of the reaction mixture. Long chain branching of olefin polymers is further described in USP's 5,272,236, 5,278,272, and 5,665,800.

Alternatively, branching, including hyper-branching, may be induced in a particular segment of the present multi-block copolymers by the use of specific catalysts known to result in "chain-walking" in the resulting polymer. For example, certain homogeneous bridged bis indenyl- or partially hydrogenated bis indenyl- zirconium catalysts, disclosed by Kaminski, et al., J. Mol. Catal. A: Chemical, 102 (1995) 59-65; Zambelli, et al., Macromolecules, 1988, 21, 617- 622; or Dias, et al., J. Mol. Catal. A: Chemical, 185 (2002) 57-64 may be used to prepare branched copolymers from single monomers, including ethylene. Higher transition metal catalysts, especially nickel and palladium catalysts are also known to lead to hyper-branched polymers (the branches of which are also branched) as disclosed in Brookhart, et al., J. Am. Chem. Soc., 1995, 117, 64145- 6415.

In one embodiment of the invention, the presence of such branching (long chain branching, 1,3 -addition, or hyper-branching) in the polymers of the invention can be confined to only the blocks or segments resulting from activity of the first olefin polymerization procatalyst (A). Accordingly, in one embodiment of the disclosure a multi-block copolymer containing blocks or segments differing in the presence of such branching in combination with other segments or blocks substantially lacking such branching (especially high density or highly crystalline polymer blocks), can be produced from a single monomer containing reaction mixture, that is, without the addition of a deliberately added comonomer. Highly preferably, in a specific embodiment of the disclosure, a multi-block copolymer comprising alternating unbranched, ethylene homopolymer segments and branched polyethylene segments, especially ethylene/propylene copolymer segments, may be prepared from an initial reaction mixture consisting essentially of ethylene as the addition polymerizable monomer. The presence of such branching in the multi-block copolymers of the invention can be detected by certain physical properties of the resulting copolymers, such as reduced surface imperfections during melt extrusion (reduced melt fracture), reduced glass transition temperature, Tg, for the amorphous segments compared to a non-branched polymer segment, and/or the presence of 1,3 -addition sequences or hyper-branching as detected by NMR techniques. The quantity of the foregoing types of branching present in the polymers of the invention (as a portion of the blocks or segments containing the same), is normally in the range from 0.01 to 10 branches per 1,000 carbons.

Exemplary procatalysts that fall within the scope of the first olefin polymerization procatalyst (A) of the present disclosure include Procatalysts (A4)-(A6), as listed below.

Procatalyst (A1): [N-(2,6-di(1-methylethyl)phenyl)amido)(2-isopropylphenyl)(α-naphthalen-2-diyl(6-pyridin-2-diyl)methane)]hafnium dimethyl] prepared according to the teachings of WO 03/40195 and WO 04/24740 as well as methods known in the art.

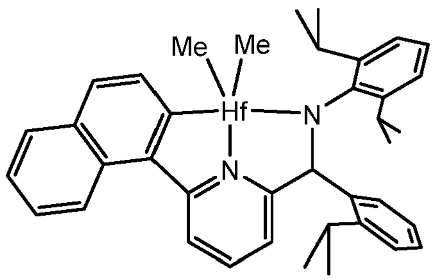

(A1)

Procatalyst (A2): (E)-((2,6-diisopropylphenyl)(2-methyl-3-(octylimino)butan-2-yl)amino)trimethyl hafnium prepared according to methods known in the art.

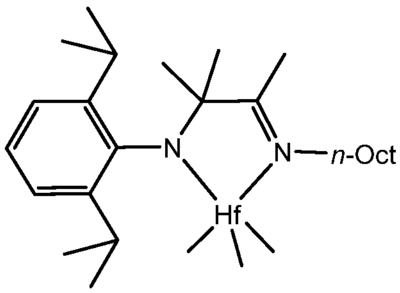

(A2)

Procatalyst (A3): [[2',2'''-[1,2-cyclohexanediylbis(methyleneoxy-κO)]bis[3-(9H-carbazol-9-yl)-5-methyl[1,1'-biphenyl]-2-olato-κO]](2-)]dimethyl hafnium prepared according to methods known in the art.

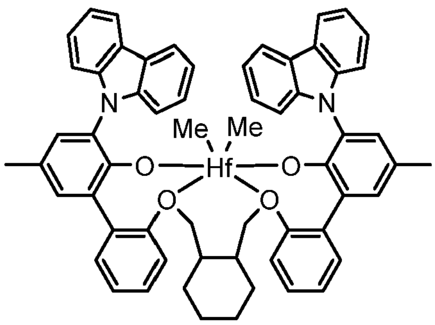

(A3)

Procatalyst (A4): [[6',6'''-[1,4-butanediylbis(oxy-κO)]bis[3-(9H-carbazol-9-yl)-3'-fluoro-5-methyl-[1,1'-biphenyl]-2-olato-κO]](2-)]-dimethyl hafnium prepared according to methods known in the art.

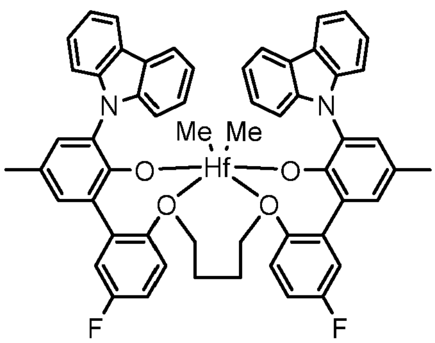

(A4)

Procatalyst (A5): [[6',6'''-[1,4-butanediylbis(oxy-κO)]bis[3-(9H-carbazol-9-yl)-3'-fluoro-5-octyl-[1,1'-biphenyl]-2-olato-κO]](2-)]-dimethyl hafnium prepared according to methods known in the art.

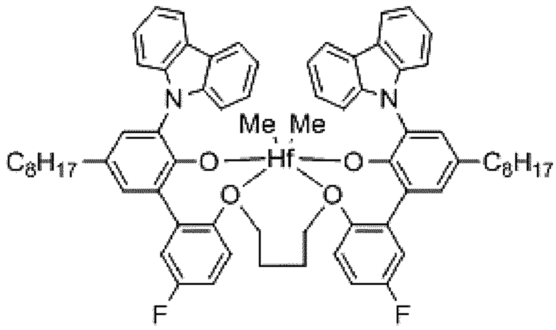

(A5)

Procatalyst (A6): [[6',6'''-[1,4-butanediylbis(oxy-κO)]bis[3-(9H-carbazol-9-yl)-3'-fluoro-5-(butyldimethylsilyl)-[1,1'-biphenyl]-2-olato-κO]](2-)]-dimethyl hafnium prepared according to methods known in the art.

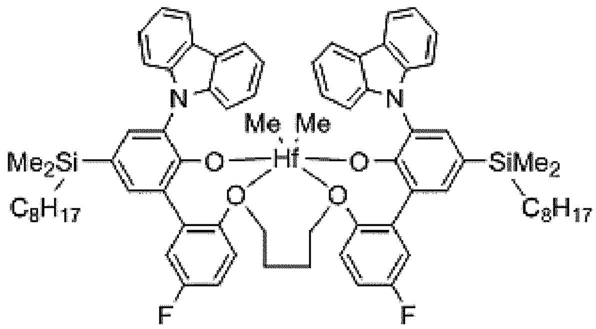

(A6)

Procatalyst (A7): (N-((6E)-6-(Butylimino-κN)-l-cyclohexen-1-yl)-2,6-bis(l-methylethyl)benzenaminato-κN)trimethyl-hafnium prepared according to the disclosures of WO2010/022228 as well as methods known in the art.

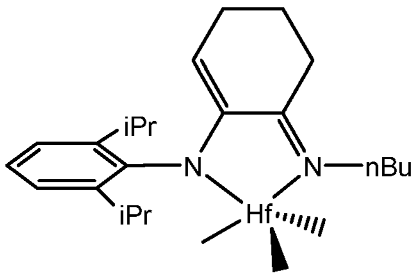

(A7).

*Second Olefin Polymerization Procatalyst (B)*

The second olefin polymerization procatalyst (B) comprises a metal-ligand complex of Formula (II):

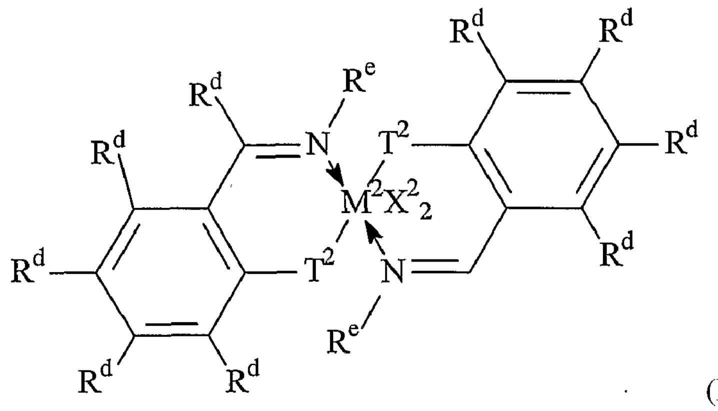

(II),

wherein:

$M^2$ is a Group 4 metal;
$T^2$ is a nitrogen, oxygen or phosphorus containing group;
$X^2$ is halo, hydrocarbyl, or hydrocarbyloxy;
$R^d$ independently at each occurrence is hydrogen, halogen, or $R^e$; and
$R^e$ independently at each occurrence is C1-20 hydrocarbyl or a heteroatom.

Suitable procatalysts that would fall within the scope of the second olefin polymerization procatalyst (B) of the present disclosure include the catalysts/complexes discussed below that are adapted for preparing polymers of the desired composition or type and capable of reversible chain transfer with a chain shuttling agent. As noted above, the terms "procatalysts," "catalysts," "metal complexes," and "complexes" used herein are to be interchangeable. In certain embodiments, the second olefin polymerization procatalyst (B) is the hard block/segment catalyst (i.e., low comonomer incorporator) of the olefin block copolymers of the present disclosure.

Such catalysts have been previously disclosed in J. Am. Chem. Soc., 118, 267-268 (1996), J. Am. Chem. Soc., 117, 6414 -6415 (1995), and Organometallics, 16, 1514-1516, (1997), among other disclosures.

Suitable examples of the foregoing metal complexes for use as procatalysts are aromatic diimine or aromatic dioxyimine complexes of Group 4 metals, especially zirconium, corresponding to the formula:

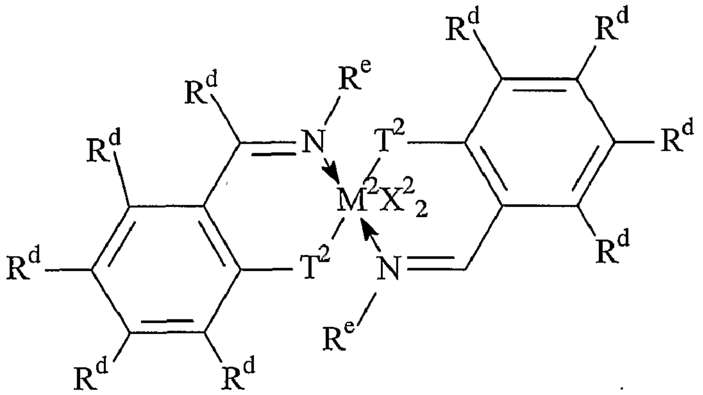

wherein;

$M^2$ is a metal of Groups 4-10 of the Periodic Table of the elements, preferably Group 4 metals, Ni(II) or Pd(II), most preferably zirconium;
$T^2$ is a nitrogen, oxygen or phosphorus containing group;
$X^2$ is halo, hydrocarbyl, or hydrocarbyloxy;
$R^d$ independently in each occurrence is hydrogen, halogen, or $R^e$; and
$R^e$ independently in each occurrence is C1-20 hydrocarbyl or a heteroatom-, especially a F, N, S or P- substituted derivative thereof, more preferably C1-20 hydrocarbyl or a F or N substituted derivative thereof, most preferably alkyl, dialkylaminoalkyl, pyrrolyl, piperidenyl, perfluorophenyl, cycloalkyl, (poly)alkylaryl, or aralkyl.

Suitable examples of the foregoing metal complexes for use as procatalysts are aromatic dioxyimine complexes of zirconium, corresponding to the formula:

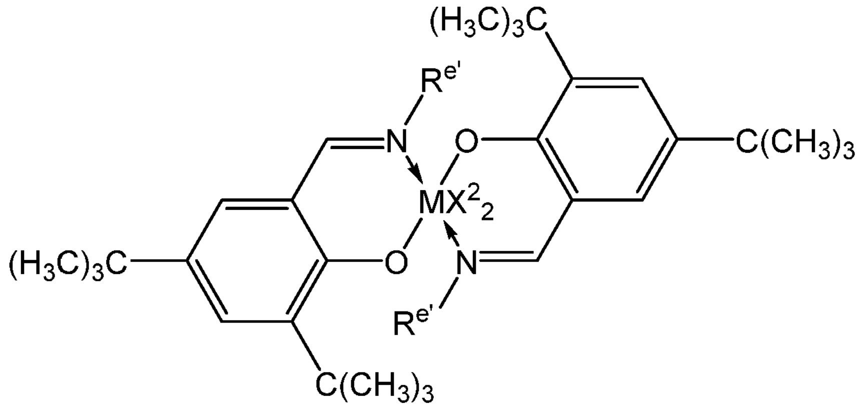

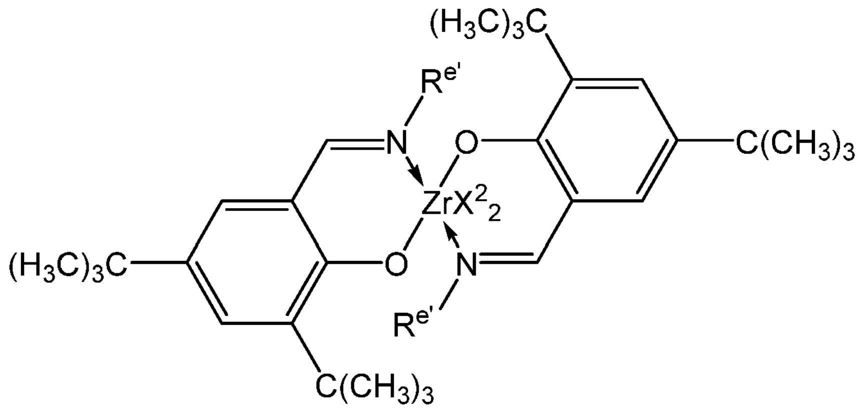

wherein;

$X^2$ is as previously defined, preferably C1-10 hydrocarbyl, most preferably methyl or benzyl; and
$R^{e'}$ is methyl, isopropyl, t-butyl, cyclopentyl, cyclohexyl, 2-metltylcyclohexyl, 2,4-dimethylcyclohexyl, 2-pyrrolyl, N-methyl-2-pyrrolyl, 2-piperidenyl, N-methyl-2-piperidenyl, benzyl, o-tolyl, 2,6-dimethylphenyl, perfluorophenyl, 2,6-di(isopropyl)phenyl, or 2,4,6-trimethylphenyl.

The foregoing complexes for use as also include certain phosphinimine complexes are disclosed in EP-A-890581. These complexes correspond to the formula: $[(R^f)_3\text{-P=N}]_fM(K^2)(R^f)_{3-f}$, wherein: $R^f$ is a monovalent ligand or two $R^f$ groups together are a divalent ligand, preferably $R^f$ is hydrogen or C1-4 alkyl;

M is a Group 4 metal,
$K^2$ is a group containing delocalized $\pi$-electrons through which $K^2$ is bound to M, said $K^2$ group containing up to 50 atoms not counting hydrogen atoms, and f is 1 or 2.

In certain embodiments, the second polymerization procatalyst (B) of the present disclosure has the structure shown below:

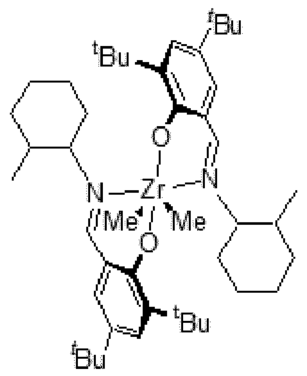

.

*Co-catalyst/Activator*

An activator is an additive which renders a procatalyst active with respect to olefin polymerization by contacting it to, or combining it with, the procatalyst. Commonly used activators abstract a monoanionic ligand, typically an alkyl group, in some cases a benzyl or methyl group, to form a cationic metal-ligand complex of the procatalyst, which has a weakly coordinating or noncoordinating anion derived or present as a portion of the activating agent. For example, activators of this type include: Brønsted acids, such as $[R_3NH]^+$ (ammonium) based activators, *e.g. N,N*-dimethylanilinium tetrakis(pentafluorophenyl)borate); and Lewis acids, such as alkyl aluminums, polymeric or oligomeric alumoxanes (also known as aluminoxanes), boranes (such as tris(pentafluorophenyl)borane), or carbocationic species (such as trityl teatrakis(pentafluorophenyl)borate). When an alumoxane alone is used as the activator, preferably the number of moles of the alumoxane that are employed is at least 100 times the number of moles of the metal-ligand complex. Lower loading of alumoxanes do not act as activators, rather they serve as scavenging agent. A scavenging agent sequesters impurities in the reactor prior to addition of the catalyst, and as such, does not constitute an activator.

Suitable activating co-catalysts for use herein include alkyl aluminums; polymeric or oligomeric alumoxanes (also known as aluminoxanes); neutral Lewis acids; and non-polymeric, non-coordinating, ion-forming compounds (including the use of such compounds under oxidizing conditions). A suitable activating technique is bulk electrolysis. Combinations of one or more of the foregoing activating co-catalysts and techniques are also contemplated. The term "alkyl aluminum" means a monoalkyl aluminum dihydride or monoalkylaluminum dihalide, a dialkyl aluminum hydride or dialkyl aluminum halide, or a trialkylaluminum. Aluminoxanes and their preparations are known at, for example, United States Patent Number (USPN) US 6,103,657. Examples of preferred polymeric or oligomeric alumoxanes are methylalumoxane, triisobutylaluminum-modified methylalumoxane, and isobutylalumoxane.

Exemplary Lewis acid activating co-catalysts are Group 13 metal compounds containing from 1 to 3 hydrocarbyl substituents as described herein. In some embodiments, exemplary Group 13 metal compounds are tri(hydrocarbyl)-substituted-aluminum or tri(hydrocarbyl)-boron compounds. In some other embodiments, exemplary Group 13 metal compounds are tri($(C_1-C_{10})$alkyl)aluminum or tri($(C_6-C_{18})$aryl)boron compounds and halogenated (including perhalogenated) derivatives thereof. In some other embodiments, exemplary Group 13 metal compounds are tris(fluoro-substituted phenyl)boranes, in other embodiments, tris(pentafluorophenyl)borane. In some embodiments, the activating co-catalyst is a tris($(C_1-C_{20})$hydrocarbyl)methane borate (e.g., trityl tetrakis(pentafluorophenyl)borate) or a tri($(C_1-C_{20})$hydrocarbyl)ammonium tetra($(C_1-C_{20})$hydrocarbyl)borate (e.g., bis(octadecyl)methylammonium tetrakis(pentafluorophenyl)borate). As used herein, the term "ammonium" means a nitrogen cation that is a $((C_1-C_{20})hydrocarbyl)_4N^+$, a $((C_1-C_{20})hydrocarbyl)_3N(H)^+$, a $((C_1-C_{20})hydrocarbyl)_2N(H)_2^+$, $(C_1-C_{20})hydrocarbylN(H)_3^+$, or $N(H)_4^+$, wherein each $(C_1-C_{20})$hydrocarbyl may be the same or different.

Exemplary combinations of neutral Lewis acid activating co-catalysts include mixtures comprising a combination of a tri($(C_1-C_4)$alkyl)aluminum and a halogenated tri($(C_6-C_{18})$aryl)boron compound, especially a tris(pentafluorophenyl)borane. Other exemplary embodiments are combinations of such neutral Lewis acid mixtures with a polymeric or oligomeric alumoxane, and combinations of a single neutral Lewis acid, especially tris(pentafluorophenyl)borane with a polymeric or oligomeric alumoxane. Exemplary embodiments ratios of numbers of moles of (metal-ligand complex):(tris(pentafluoro-phenylborane): (alumoxane) [e.g., (Group 4 metal-ligand complex):(tris(pentafluoro-phenylborane):(alumoxane)] are from 1:1:1 to 1:10:30, other exemplary embodiments are from 1:1:1.5 to 1:5:10.

Many activating co-catalysts and activating techniques have been previously taught with respect to different metal-ligand complexes in the following USPNs: US 5,064,802; US 5,153,157; US 5,296,433; US 5,321,106; US 5,350,723; US 5,425,872; US 5,625,087; US 5,721,185; US 5,783,512; US 5,883,204; US 5,919,983; US 6,696,379; and US 7,163,907. Examples of suitable hydrocarbyloxides are disclosed in US 5,296,433. Examples of suitable Bronsted acid salts for addition polymerization catalysts are disclosed in US 5,064,802; US 5,919,983; US 5,783,512. Examples

of suitable salts of a cationic oxidizing agent and a non-coordinating, compatible anion as activating co-catalysts for addition polymerization catalysts are disclosed in US 5,321,106. Examples of suitable carbenium salts as activating co-catalysts for addition polymerization catalysts are disclosed in US 5,350,723. Examples of suitable silylium salts as activating co-catalysts for addition polymerization catalysts are disclosed in US 5,625,087. Examples of suitable complexes of alcohols, mercaptans, silanols, and oximes with tris(pentafluorophenyl)borane are disclosed in US 5,296,433. Some of these catalysts are also described in a portion of US 6,515,155 B1 beginning at column 50, at line 39, and going through column 56, at line 55.

In some embodiments, the procatalysts of the present disclosure may be activated to form an active catalyst composition by combination with one or more cocatalyst such as a cation forming cocatalyst, a strong Lewis acid, or a combination thereof. Suitable cocatalysts for use include polymeric or oligomeric aluminoxanes, especially methyl aluminoxane, as well as inert, compatible, noncoordinating, ion forming compounds. Exemplary suitable cocatalysts include, but are not limited to modified methyl aluminoxane (MMAO); bis(hydrogenated tallow alkyl)methylammonium tetrakis(pentafluorophenyl)borate; triethyl aluminum (TEA); and any combinations thereof.

In some embodiments, one or more of the foregoing activating co-catalysts are used in combination with each other. An especially preferred combination is a mixture of a tri(($C_1$-$C_4$)hydrocarbyl)aluminum, tri(($C_1$-$C_4$)hydrocarbyl)borane, or an ammonium borate with an oligomeric or polymeric alumoxane compound. In exemplary embodiments of the present disclosure, the co-catalyst is $[(C_{16-18}H_{33-37})_2CH_3NH]$ tetrakis(pentafluorophenyl)borate salt.

The ratio of total number of moles of one or more catalysts to total number of moles of one or more of the activating co-catalysts is from 1:10,000 to 100:1. In some embodiments, the ratio is at least 1:5000, in some other embodiments, at least 1:1000; and 10:1 or less, and in some other embodiments, 1:1 or less. When an alumoxane alone is used as the activating co-catalyst, preferably the number of moles of the alumoxane that are employed is at least 100 times the number of moles of the catalysts. When tris(pentafluorophenyl)borane alone is used as the activating co-catalyst, in some other embodiments, the number of moles of the tris(pentafluorophenyl)borane that are employed to the total number of moles of one or more catalysts form 1:0.5 to 1:10, in some other embodiments, from 1:1 to 1:6, in some other embodiments, from 1:1 to 1:5. The remaining activating co-catalysts are generally employed in approximately mole quantities equal to the total mole quantities of one or more catalysts.

*Polymerization Processes*

Any conventional polymerization processes may be employed to produce the block copolymers of the present disclosure. Such conventional polymerization processes include, but are not limited to, solution polymerization processes, gas phase polymerization processes, slurry, or particle forming polymerization processes, and combinations thereof using one or more conventional reactors, e.g., loop reactors, isothermal reactors, fluidized bed reactors, stirred tank reactors, batch reactors in parallel, series, and/or any combinations thereof.

In certain embodiments of the present disclosure, multi-block copolymers are prepared via a solution polymerization process employing a first olefin polymerization procatalyst (A), a second olefin polymerization procatalyst (B), one or more cocatalysts, and a chain shuttling agent (C).

The polymerization processes of the disclosure employing a first olefin polymerization procatalyst A, a second olefin polymerization procatalyst B, one or more cocatalysts, and chain shuttling agent C may be further elucidated by reference to Figure 1, where there are illustrated activated catalyst site A, 10, which under polymerization conditions forms a polymer chain, 13, attached to the active catalyst site, 12. Similarly, active catalyst site B, 20, produces a differentiated polymer chain, 23, attached to the active catalyst site, 22. A chain shuttling agent C1, attached to a polymer chain produced by active catalyst B, 14, exchanges its polymer chain, 23, for the polymer chain, 13, attached to catalyst site A. Additional chain growth under polymerization conditions causes formation of a multi-block copolymer, 18, attached to active catalyst site A. Similarly, chain shuttling agent C2, attached to a polymer chain produced by active catalyst site A, 24, exchanges its polymer chain, 13, for the polymer chain, 23, attached to catalyst site B. Additional chain growth under polymerization conditions causes formation of a multi-block copolymer, 28, attached to active catalyst site B. The growing multi-block copolymers are repeatedly exchanged between active catalyst A and active catalyst B by means of shuttling agent C resulting in formation of a block or segment of differing properties whenever exchange to the opposite active catalyst site occurs. The growing polymer chains may be recovered while attached to a chain shuttling agent and functionalized if desired. Alternatively, the resulting polymer may be recovered by scission from the active catalyst site or the shuttling agent, through use of a proton source or other killing agent.

It is believed (without wishing to be bound by such belief), that the composition of the respective segments or blocks, and especially of the end segments of the polymer chains, may be influenced through selection of process conditions or other process variables. In the polymers of the invention, the nature of the end segments is determined by the relative rates of chain transfer or termination for the respective catalysts as well as by the relative rates of chain shuttling. Possible chain termination mechanisms include, but are not limited to, β-hydrogen elimination, β-hydrogen transfer to monomer, β-methyl elimination, and chain transfer to hydrogen or other chain- terminating reagent such as

an organosilane or chain functionalizing agent. Accordingly, when a low concentration of chain shuttling agent is used, the majority of polymer chain ends will be generated in the polymerization reactor by one of the foregoing chain termination mechanisms and the relative rates of chain termination for catalyst (A) and (B) will determine the predominant chain terminating moiety. That is, the catalyst having the fastest rate of chain termination will produce relatively more chain end segments in the finished polymer.

In contrast, when a high concentration of chain shuttling agent is employed, the majority of the polymer chains within the reactor and upon exiting the polymerization zone are attached or bound to the chain shuttling agent. Under these reaction conditions, the relative rates of chain transfer of the polymerization catalysts and the relative rate of chain shuttling of the two catalysts primarily determines the identity of the chain terminating moiety. If catalyst (A) has a faster chain transfer and/or chain shuttling rate than catalyst (B), then the majority of the chain end segments will be those produced by catalyst (A).

At intermediate concentrations of chain shuttling agent, all three of the aforementioned factors are instrumental in determining the identity of the final polymer block. The foregoing methodology may be expanded to the analysis of multi-block polymers having more than two block types and for controlling the average block lengths and block sequences for these polymers. For example, using a mixture of catalysts 1, 2, and 3 with a chain shuttling agent, for which each catalyst type makes a different type of polymer block, produces a linear block copolymer with three different block types. Furthermore, if the ratio of the shuttling rate to the propagation rate for the three catalysts follows the order 1>2>3, then the average block length for the three block types will follow the order 3>2>1, and there will be fewer instances of 2-type blocks adjacent to 3 -type blocks than 1-type blocks adjacent to 2-type blocks.

It follows that a method exists for controlling the block length distribution of the various block types. For example, by selecting catalysts 1, 2, and 3 (wherein 2 and 3 produce substantially the same polymer block type), and a chain shuttling agent, and the shuttling rate follows the order 1 > 2 > 3, the resulting polymer will have a bimodal distribution of block lengths made from the 2 and 3 catalysts.

During the polymerization, the reaction mixture comprising one or more monomers is contacted with the activated catalyst composition according to any suitable polymerization conditions. The process is characterized by use of elevated temperatures and pressures. Hydrogen may be employed as a chain transfer agent for molecular weight control according to known techniques if desired. As in other similar polymerizations, it is highly desirable that the monomers and solvents employed be of sufficiently high purity that catalyst deactivation does not occur. Any suitable technique for monomer purification such as devolatilization at reduced pressure, contacting with molecular sieves or high surface area alumina, or a combination of the foregoing processes may be employed. The skilled artisan will appreciate that the ratio of chain shuttling agent to one or more catalysts and or monomers in the process of the present invention may be varied in order to produce polymers differing in one or more chemical or physical properties. Supports may be employed in the present invention, especially in slurry or gas-phase polymerizations. Suitable supports include solid, particulated, high surface area, metal oxides, metalloid oxides, or mixtures thereof (interchangeably referred to herein as an inorganic oxide). Examples include: talc, silica, alumina, magnesia, titania, zirconia, $Sn_2O_3$, aluminosilicates, borosilicates, clays, and mixtures thereof. Suitable supports preferably have a surface area as determined by nitrogen porosimetry using the B.E.T. method from 10 to 1000 m /g, and preferably from 100 to 600 $m^2$/g. The average particle size typically is from 0.1 to 500 μm, preferably from 1 to 200 μm, more preferably 10 to 100 μm.

In one embodiment of the invention the present catalyst composition and optional support may be spray dried or otherwise recovered in solid, particulated form to provide a composition that is readily transported and handled. Suitable methods for spray diying a liquid containing slurry are well known in the art and usefully employed herein. Preferred techniques for spray drying catalyst compositions for use herein are described in US-A's-5 ,648,310 and 5,672,669.

The polymerization is desirably carried out as a continuous polymerization, preferably a continuous, solution polymerization, in which catalyst components, shuttling agent(s), monomers, and optionally solvent, adjuvants, scavengers, and polymerization aids are continuously supplied to the reaction zone and polymer product continuously removed there from. Within the scope of the terms "continuous" and "continuously" as used in this context are those processes in which there are intermittent additions of reactants and removal of products at small regular or irregular intervals, so that, over time, the overall process is substantially continuous. The catalyst compositions can be advantageously employed in a high pressure, solution, slurry, or gas phase polymerization process. For a solution polymerization process it is desirable to employ homogeneous dispersions of the catalyst components in a liquid diluent in which the polymer is soluble under the polymerization conditions employed. One such process utilizing an extremely fine silica or similar dispersing agent to produce such a homogeneous catalyst dispersion where either the metal complex or the cocatalyst is only poorly soluble is disclosed in US-A-5,783,512. A solution process to prepare the novel polymers of the present invention, especially a continuous solution process is preferably carried out at a temperature between 80°C and 250°C, more preferably between 100°C and 210°C, and most preferably between 110°C and 210°C. A high pressure process is usually carried out at temperatures from 100°C to 400°C and at pressures above 500 bar (50 MPa). A slurry process typically uses an inert hydrocarbon diluent and temperatures of from 0°C up to a temperature just below the temperature

at which the resulting polymer becomes substantially soluble in the inert polymerization medium. Preferred temperatures in a slurry polymerization are from 30°C, preferably from 60°C up to 115°C, preferably up to 100°C. Pressures typically range from atmospheric (100 kPa) to 500 psi (3.4 MPa). In all of the foregoing processes, continuous or substantially continuous polymerization conditions are preferably employed. The use of such polymerization conditions, especially continuous, solution polymerization processes employing two or more active polymerization catalyst species, allows the use of elevated reactor temperatures which results in the economical production of multi-block or segmented copolymers in high yields and efficiencies. Both homogeneous and plug-flow type reaction conditions may be employed. The latter conditions are preferred where tapering of the block composition is desired.

Both catalyst compositions (A) and (B) may be prepared as a homogeneous composition by addition of the requisite metal complexes to a solvent in which the polymerization will be conducted or in a diluent compatible with the ultimate reaction mixture. The desired cocatalyst or activator and the shuttling agent may be combined with the catalyst composition either prior to, simultaneously with, or after combination with the monomers to be polymerized and any additional reaction diluent.

At all times, the individual ingredients as well as any active catalyst composition must be protected from oxygen and moisture. Therefore, the catalyst components, shuttling agent and activated catalysts must be prepared and stored in an oxygen and moisture free atmosphere, preferably a dry, inert gas such as nitrogen.

Without limiting in any way the scope of the invention, one means for carrying out such a polymerization process is as follows. In a stirred-tank reactor, the monomers to be polymerized are introduced continuously together with any solvent or diluent. The reactor contains a liquid phase composed substantially of monomers together with any solvent or diluent and dissolved polymer. Preferred solvents include $C_{4}$-$_{1}$0 hydrocarbons or mixtures thereof, especially alkanes such as hexane or mixtures of alkanes, as well as one or more of the monomers employed in the polymerization. Procatalysts along with cocatalyst and chain shuttling agent are continuously or intermittently introduced in the reactor liquid phase or any recycled portion thereof. The reactor temperature and pressure may be controlled by adjusting the solvent/monomer ratio, the catalyst addition rate, as well as by cooling or heating coils, jackets or both. The polymerization rate is controlled by the rate of catalyst addition. The ethylene content of the polymer product is determined by the ratio of ethylene to comonomer in the reactor, which is controlled by manipulating the respective feed rates of these components to the reactor. The polymer product molecular weight is controlled, optionally, by controlling other polymerization variables such as the temperature, monomer concentration, or by the previously mentioned chain transfer agent, as is well known in the art. Upon exiting the reactor, the effluent is contacted with a catalyst kill agent such as water, steam or an alcohol. The polymer solution is optionally heated, and the polymer product is recovered by flashing off gaseous monomers as well as residual solvent or diluent at reduced pressure, and, if necessary, conducting further devolatilization in equipment such as a devolatilizing extruder. In a continuous process the mean residence time of the catalyst and polymer in the reactor generally is from 5 minutes to 8 hours, and preferably from 10 minutes to 6 hours.

Alternatively, the foregoing polymerization may be carried out in a continuous loop reactor with or without a monomer, catalyst or shuttling agent gradient established between differing regions thereof, optionally accompanied by separated addition of catalysts and/or chain transfer agent, and operating under adiabatic or non-adiabatic solution polymerization conditions or combinations of the foregoing reactor conditions. Examples of suitable loop reactors and a variety of suitable operating conditions for use therewith are found in USP's 5,977,251, 6,319,989 and 6,683,149.

Although not as desired, the catalyst composition may also be prepared and employed as a heterogeneous catalyst by adsorbing the requisite components on an inert inorganic or organic particulated solid, as previously disclosed. In an preferred embodiment, a heterogeneous catalyst is prepared by co-precipitating the metal complex and the reaction product of an inert inorganic compound and an active hydrogen containing activator, especially the reaction product of a tri (C1.4 alkyl) aluminum compound and an ammonium salt of a hydroxyaryltris(pentafluorophenyl)borate, such as an ammonium salt of (4-hydroxy-3,5-ditertiarybutylphenyl)tris(pentafluorophenyl)borate. When prepared in heterogeneous or supported form, the catalyst composition may be employed in a slurry or a gas phase polymerization. As a practical limitation, slurry polymerization takes place in liquid diluents in which the polymer product is substantially insoluble. Preferably, the diluent for slurry polymerization is one or more hydrocarbons with less than 5 carbon atoms. If desired, saturated hydrocarbons such as ethane, propane or butane may be used in whole or part as the diluent. As with a solution polymerization, the $\alpha$-olefin comonomer or a mixture of different $\alpha$- olefin monomers may be used in whole or part as the diluent. Most preferably at least a major part of the diluent comprises the $\alpha$-olefin monomer or monomers to be polymerized.

Preferably for use in gas phase polymerization processes, the support material and resulting catalyst has a median particle diameter from 20 to 200 $\mu$m, more preferably from 30 $\mu$m to 150 $\mu$m, and most preferably from 50 $\mu$m to 100 $\mu$m. Preferably for use in slurry polymerization processes, the support has a median particle diameter from 1 $\mu$m to 200 $\mu$m, more preferably from 5 $\mu$m to 100 $\mu$m, and most preferably from 10 $\mu$m to 80 $\mu$m.

Suitable gas phase polymerization process for use herein are substantially similar to known processes used commercially on a large scale for the manufacture of polypropylene, ethylene/ $\alpha$- olefin copolymers, and other olefin polymers. The gas phase process employed can be, for example, of the type which employs a mechanically stirred bed

or a gas fluidized bed as the polymerization reaction zone. Preferred is the process wherein the polymerization reaction is carried out in a vertical cylindrical polymerization reactor containing a fluidized bed of polymer particles supported or suspended above a perforated plate or fluidization grid, by a flow of fluidization gas.

The gas employed to fluidize the bed comprises the monomer or monomers to be polymerized, and also serves as a heat exchange medium to remove the heat of reaction from the bed. The hot gases emerge from the top of the reactor, normally via a tranquilization zone, also known as a velocity reduction zone, having a wider diameter than the fluidized bed and wherein fine particles entrained in the gas stream have an opportunity to gravitate back into the bed. It can also be advantageous to use a cyclone to remove ultra-fine particles from the hot gas stream. The gas is then normally recycled to the bed by means of a blower or compressor and one or more heat exchangers to strip the gas of the heat of polymerization.

A preferred method of cooling of the bed, in addition to the cooling provided by the cooled recycle gas, is to feed a volatile liquid to the bed to provide an evaporative cooling effect, often referred to as operation in the condensing mode. The volatile liquid employed in this case can be, for example, a volatile inert liquid, for example, a saturated hydrocarbon having 3 to 8, preferably 4 to 6, carbon atoms. In the case that the monomer or comonomer itself is a volatile liquid, or can be condensed to provide such a liquid, this can suitably be fed to the bed to provide an evaporative cooling effect. The volatile liquid evaporates in the hot fluidized bed to form gas which mixes with the fluidizing gas. If the volatile liquid is a monomer or comonomer, it will undergo some polymerization in the bed. The evaporated liquid then emerges from the reactor as part of the hot recycle gas, and enters the compression/heat exchange part of the recycle loop. The recycle gas is cooled in the heat exchanger and, if the temperature to which the gas is cooled is below the dew point, liquid will precipitate from the gas. This liquid is desirably recycled continuously to the fluidized bed. It is possible to recycle the precipitated liquid to the bed as liquid droplets carried in the recycle gas stream. This type of process is described, for example in EP-89691; U.S. 4,543,399; WO-94/ 25495 and U.S. 5,352,749. A particularly preferred method of recycling the liquid to the bed is to separate the liquid from the recycle gas stream and to reinject this liquid directly into the bed, preferably using a method which generates fine droplets of the liquid within the bed. This type of process is described in WO-94/28032. The polymerization reaction occurring in the gas fluidized bed is catalyzed by the continuous or semi-continuous addition of catalyst composition according to the invention. The catalyst composition may be subjected to a prepolymerization step, for example, by polymerizing a small quantity of olefin monomer in a liquid inert diluent, to provide a catalyst composite comprising supported catalyst particles embedded in olefin polymer particles as well. The polymer is produced directly in the fluidized bed by polymerization of the monomer or mixture of monomers on the fluidized particles of catalyst composition, supported catalyst composition or prepolymerized catalyst composition within the bed. Start-up of the polymerization reaction is achieved using a bed of preformed polymer particles, which are preferably similar to the desired polymer, and conditioning the bed by drying with inert gas or nitrogen prior to introducing the catalyst composition, the monomers and any other gases which it is desired to have in the recycle gas stream, such as a diluent gas, hydrogen chain transfer agent, or an inert condensable gas when operating in gas phase condensing mode. The produced polymer is discharged continuously or semi-continuously from the fluidized bed as desired.

The gas phase processes most suitable for the practice of this invention are continuous processes which provide for the continuous supply of reactants to the reaction zone of the reactor and the removal of products from the reaction zone of the reactor, thereby providing a steady-state environment on the macro scale in the reaction zone of the reactor. Products are readily recovered by exposure to reduced pressure and optionally elevated temperatures (devolatilization) according to known techniques. Typically, the fluidized bed of the gas phase process is operated at temperatures greater than 50°C, preferably from 60°C to 110°C, more preferably from 70°C to 110°C.

Examples of gas phase processes which are adaptable for use in the process of this invention are disclosed in US Patents: 4,588,790; 4,543,399; 5,352,749; 5,436,304; 5,405,922; 5,462,999; 5,461,123; 5,453,471; 5,032,562; 5,028,670; 5,473,028; 5,106,804; 5,556,238; 5,541,270; 5,608,019; and 5,616,661.

As previously mentioned, functionalized derivatives of multi-block copolymers are also included within the present invention. Examples include metallated polymers wherein the metal is the remnant of the catalyst or chain shuttling agent employed, as well as further derivatives thereof, for example, the reaction product of a metallated polymer with an oxygen source and then with water to form a hydroxyl terminated polymer. In another embodiment, sufficient air or other quench agent is added to cleave some or all of the shuttling agent-polymer bonds thereby converting at least a portion of the polymer to a hydroxyl terminated polymer. Additional examples include olefin terminated polymers formed by $\beta$-hydride elimination and ethylenic unsaturation in the resulting polymer.

In one embodiment of the invention the multi-block copolymer may be functionalized by maleation (reaction with maleic anhydride or its equivalent), metallation (such as with an alkyl lithium reagent, optionally in the presence of a Lewis base, especially an amine, such as tetramethylethylenediamine), or by incorporation of a diene or masked olefin in a copolymerization process. After polymerization involving a masked olefin, the masking group, for example a trihydrocarbylsilane, may be removed thereby exposing a more readily functionalized remnant. Techniques for functionalization of polymers are well known, and disclosed for example in USP 5,543,458, and elsewhere.

Because a substantial fraction of the polymeric product exiting the reactor is terminated with the chain shuttling agent, further functionalization is relatively easy. The metallated polymer species can be utilized in well known chemical reactions such as those suitable for other alkyl- aluminum, alkyl-gallium, alkyl-zinc, or alkyl-Group 1 compounds to form amine-, hydroxy-, epoxy-, ketone, ester, nitrile, and other functionalized terminated polymer products. Examples of suitable reaction techniques that are adaptable for use here in are described in Negishi, "Organometallics in Organic Synthesis", Vol. 1 and 2, (1980), and other standard texts in organometallic and organic synthesis.

*Polymer Products*

In certain embodiments, multi-block copolymers (i.e., olefin block copolymers or OBCs) prepared by the compositions/catalyst systems/processes of the present disclosure are defined as having:

(A) Mw/Mn from 1.0 to 10.0 (e.g., from 1.0 to 9.0, from 1.0 to 8.0, from 1.0 to 7.0, from 1.0 to 6.0, from 1.0 to 5.0, from 1.5 to 5.0, from 1.5 to 4.0, from 1.7 to 3.5, etc.), at least one melting point, Tm, in degrees Celsius, and a density, d, in grams/cubic centimeter, where in the numerical values of Tm and d correspond to the relationship:

$$T_{\mathrm{m}} \geqq -2002.9+4538.5(d)-2422.2(d)^2;$$

and/or
(B) $M_w/M_n$ from about 1.7 to about 3.5, and is characterized by a heat of fusion, ΔH in J/g, and a delta quantity, ΔT, in degrees Celsius defined as the temperature difference between the tallest DSC peak and the tallest CRYSTAF peak, wherein the numerical values of ΔT and ΔH have the following relationships:

$\Delta T > -0.1299(\Delta H)+62.81$ for $\Delta H$ greater than zero and up to 130 J/g,
$\Delta T \geqq 48°$ C. for $\Delta H$ greater than 130 J/g,
wherein the CRYSTAF peak is determined using at least 5 percent of the cumulative polymer, and if less than 5 percent of the polymer has an identifiable CRYSTAF peak, then the CRYSTAF temperature is 30° C.; and/or

(C) an elastic recovery, Re, in percent at 300 percent strain and 1 cycle measured with a compression-molded film of the ethylene/α-olefin interpolymer, and has a density, d, in grams/cubic centimeter, wherein the numerical values of Re and d satisfy the following relationship when ethylene/α-olefin interpolymer is substantially free of a cross-linked phase:

$$Re > 1481-1629(d);$$

and/or
(D) a molecular fraction which elutes between 40° C. and 130° C. when fractionated using TREF, characterized in that the fraction has a molar comonomer content of at least 5 percent higher than that of a comparable random ethylene interpolymer fraction eluting between the same temperatures, wherein said comparable random ethylene interpolymer has the same comonomer(s) and has a melt index, density, and molar comonomer content (based on the whole polymer) within 10 percent of that of the ethylene/α-olefin interpolymer; and/or
(E) a storage modulus at 25° C., G'(25° C.), and a storage modulus at 100° C., G'(100° C.), wherein the ratio of G'(25° C.) to G' (100° C.) is in the range of about 1:1 to about 9:1; and/or
(F) a molecular fraction which elutes between 40° C. and 130° C. when fractionated using TREF, characterized in that the fraction has a block index of at least 0.5 and up to 1 and a molecular weight distribution, Mw/Mn, greater than 1.3; and/or
(G) an average block index greater than zero and up to 1.0 and a molecular weight distribution, Mw/Mn greater than 1.3. It is understood that the olefin block copolymer may have one, some, all, or any combination of properties (A)-(G). Block Index can be determined as described in detail in U.S. Pat. No. 7,608,668. Analytical methods for determining properties (A) through (G) are disclosed in, for example, U.S. Pat. No 7,608,668, Col. 31, line 26 through Col. 35, line 44.

In certain embodiments, the olefin block copolymers prepared by the compositions/catalyst systems/processes of the present disclosure have a density of from 0.820 g/cc to 0.925 g/cc (e.g., from 0.860 g/cc to 0.890 g/cc). In some embodiments, the olefin block copolymers prepared by the compositions/catalyst systems/processes of the present disclosure have a melt index (MI) from 0.1 g/10 min to 1000 g/10 min (e.g., from 0.1 g/10 min to 500 g/10 min, from 0.1

g/10 min to 100 g/10 min, from 0.1 g/10 min to 50 g/10 min, from 0.1 g/10 min to 35 g/10 min, from 0.1 g/10 min to 30 g/10, from 0.1 g/10 min to 20 g/10 min, and/or from 0.1 g/10 min to 15 g/10 min), as measured by ASTM D 1238 (190° C/2.16 kg). In certain embodiments, the olefin block copolymers prepared by the compositions/catalyst systems/processes of the present disclosure have a molecular weight of 10,000 to 250,000 g/mole (e.g., from 10,000 to 200,000 g/mole and/or from 20,000 to 175,000 g/mole). In certain embodiments, the olefin block copolymers prepared by the compositions/catalyst systems/processes of the present disclosure have a residual zinc content from 50 ppm to 1000 ppm (e.g., from 50 ppm to 750 ppm, from 50 ppm to 500 ppm, and/or from 75 ppm to 400 ppm). In certain embodiments, the olefin block copolymers of the present disclosure have a molecular weight distribution (MWD or PDI) of less than 5.0 (e.g., less than 4.0, less than 3.5, less than 3.0, less than 2.9, less than 2.8, etc.). In certain embodiments, the olefin block copolymers of the present disclosure have a thermomechanical resistance (TMA) of greater than 100 °C. In some embodiments, the olefin block copolymers of the present disclosure have a tear strength of greater than 100 $lb_f$/in.

## Examples

*Methodologies*

**Combined Catalyst Efficiency:** The combined catalyst efficiency is calculated by dividing the mass (e.g., the number of kilograms ($kg_{polymer}$)) of the olefin block copolymer prepared by the mass (e.g., the total number of milligrams or grams ($g_{metal}$)) of metal from both procatalysts.

**3D-GPC:** A high temperature Triple Detector Gel Permeation Chromatography (3D-GPC) system equipped with Robotic Assistant Delivery (RAD) system for sample preparation and sample injection was used to measure molecular weight. The concentration detector is an Infra-red concentration detector (IR4 from Polymer Char, Valencia, Spain), which was used to determine the molecular weight and molecular weight distribution. The other two detectors are a Precision Detectors (Agilent) 2-angle laser light scattering detector, Model 2040, and a 4-capillary differential viscometer detector, Model 150R, from Malvern (Houston, TX). The 15° angle of the light scattering detector was used for calculation purposes.

Data collection was performed using a Polymer Char DM 100 Data acquisition box. The carrier solvent was 1,2,4-trichlorobenzene (TCB). The system was equipped with an on-line solvent degas device from Agilent. The column compartment was operated at 150 °C. The columns were four Mixed A-LS 30 cm, 20 micron columns. The samples were prepared at 2.0 mg/mL using RAD system. The chromatographic solvent (TCB) and the sample preparation solvent contained 200 ppm of butylated hydroxytoluene (BHT) and both solvent sources were nitrogen sparged. Polyethylene samples were stirred gently at 150 °C for 3 hours. The injection volume was 200 μl, and the flow rate was 1.0 mL/minute. A flow rate marker, a drop of decane added into the sample bottle, was used to linearly correct the flow rate for all samples by alignment of the decane peaks.

Data was processed using in-house software. Calibration of the GPC columns was performed with 21 narrow molecular weight distribution polystyrene standards. The molecular weights of the standards ranged from 580 to 8,400,000 g/mol, and were arranged in 6 "cocktail" mixtures, with at least a decade of separation between individual molecular weights.

The polystyrene standard peak molecular weights were converted to polyethylene molecular weights using the following equation (J. Polym. Sci., Polym. Let. 1968, 6, 621 - 624):[i]

$$M_{polyethylene}=A(M_{polystyrene})^{B} \quad (1)$$

Here B has a value of 1.0, and the experimentally determined value of A is around 0.39.

A fifth order polynomial was used to fit the respective polyethylene-equivalent calibration points obtained from equation (1) to their observed elution volumes. The actual polynomial fit was obtained so as to relate the logarithm of polyethylene equivalent molecular weights to the observed elution volumes (and associated powers) for each polystyrene standard.

Number, weight, and z-average molecular weights were calculated according to the following equations:

$$\overline{Mn}=\frac{\sum^{i} Wf_i}{\sum^{i}\left(Wf_i / M_i\right)} \qquad (2)$$

$$\overline{Mw} = \frac{\sum^{i}(Wf_i * M_i)}{\sum^{i} Wf_i} \qquad (3)$$

$$\overline{Mz} = \frac{\sum^{i}(Wf_i * M_i^{2})}{\sum^{i}(Wf_i * M_i)} \qquad (4)$$

Where, $Wf_i$ is the weight fraction of the *i*-th component and $M_i$ is the molecular weight of the i-th component.

The MWD was expressed as the ratio of the weight average molecular weight (Mw) to the number average molecular weight (Mn).

The *A* value was determined by adjusting A value in equation (1) until Mw, the weight average molecular weight calculated using equation (3) and the corresponding retention volume polynomial, agreed with the independently determined value of Mw obtained in accordance with the linear homopolymer reference with known weight average molecular weight of 115,000 g/mol.

The absolute molecular weight was calculated use the 15° laser light scattering signal and the IR concentration detector, $M_{PE,I,\,abs}=K_{LS}*(LS_i)/(IR_i)$, using the same $K_{LS}$ calibration constant as in equation (5). The paired data set of the $i^{th}$ slice of the IR response and LS response was adjusted using the determined off-set obtained by a Systematic Approach practice:

$$\overline{Mw}(abs) = K_{LS} * \frac{\sum^{i}(LS_i)}{\sum^{i}(IR_i)} \qquad (5)$$

where, $K_{LS}$ = LS-MW calibration constant. As explained before, the response factor, $K_{LS}$, of the laser detector was determined using the certificated value for the weight average molecular weight of NIST 1475 (52,000 g/mol).

**Differential Scanning Calorimetry (DSC) analysis:** Melt temperature (Tm), glass transition temperature (Tg), crystallization temperature (Tc) and Heat of Melt may be measured by differential scanning calorimetry (DSC Q2000, TA Instruments, Inc.) using a Heat-Cool-Heat temperature profile. Open-pan DSC samples of 3-6 mg of polymer are first heated from room temperature to setpoint at 10 °C per min. Traces are analyzed individually using TA Universal Analysis software or TA Instruments TRIOS software.

**Density:** Density measurements are conducted according to ASTM D792.

**Melt index:** $I_2$ and $I_{10}$ are measured in accordance with ASTM D-1238 (190°C; 2.16 kg and 10 kg).

**Residual zinc content (ppm)** may be measured by standard industry procedure, such as mass balance or an x-ray fluorescence (XRF) method.

**Compression Molding:** Samples for physical testing were prepared by compression molding. Samples were compression molded into plaques approximately 3.2 mm in thickness according to ASTM D4703.

**Reactivity Ratios:** Reactivity ratios of the olefin polymerization procatalysts may be determined by the discussion and mathematical formulas above.

**CEF:** Comonomer distribution analysis is performed with Crystallization Elution Fractionation (CEF) (PolymerChar, Spain) (Monrabal et al, Macromol. Symp. 257, 71-79 (2007)) equipped with IR-4 detector (PolymerChar, Spain) and two angle light scattering detector Model 2040 (Precision Detectors, currently Agilent Technologies). IR-4 or IR-5 detector is used. A 10 or 20 micron guard column of 50X4.6 mm (PolymerLab, currently Agilent Technologies) is installed just before the IR-4 detector or IR-5 detector in the detector oven. Ortho-dichlorobenzene (ODCB, 99% anhydrous grade) and 2,5-di-tert-butyl-4-methylphenol ("BHT", catalogue number B1378-500G, batch number 098K0686) from Sigma-Aldrich are obtained. ODCB is distilled before use. Silica gel 40 (particle size 0.2-0.5 mm, catalogue number 10181-3) from EMD Chemicals is also obtained. The silica gel is dried in a vacuum oven at 160°C for about two hours before use. Eight hundred milligrams of BHT and five grams of the silica gel are added to two liters of ODCB. ODCB can be also dried by passing through a column or columns packed with silica gel. For the CEF instrument equipped with an autosampler with N2 purging capability, Silica gel 40 is packed into two 300 x 7.5 mm GPC size stainless steel columns and the Silica gel 40 columns are installed at the inlet of the pump of the CEF instrument to dry ODCB; and no BHT is added to the mobile phase. This "ODCB containing BHT and silica gel" or ODCB dried with silica gel 40 is now referred to as

"ODCB." This ODBC is sparged with dried nitrogen (N2) for one hour before use. Dried nitrogen is such that is obtained by passing nitrogen at <90 psig over CaCOs and 5Å molecular sieves. The resulting nitrogen should have a dew point of approximately -73°C. Sample preparation is done with autosampler at 4 mg/ml (unless otherwise specified) under shaking at 160°C for 2 hours. The injection volume is 300μl. The temperature profile of CEF is: crystallization at 3°C/min from 110°C to 30°C, the thermal equilibrium at 30°C for 5 minutes (including Soluble Fraction Elution Time being set as 2 minutes), elution at 3°C/min from 30°C to 140°C. The flow rate during crystallization is 0.052 ml/min. The flow rate during cooling step is 0.052mL/min. The flow rate during elution is 0.50 ml/min. The data is collected at one data point/second. The CEF column is packed with glass beads at 125 μm± 6% (MO-SCI Specialty Products) with 1/8 inch stainless tubing according to U.S. Patent No. 8,372,931. The column outside diameter (OD) is 1/8 inch. The critical parameters needed to duplicate the method include the column internal diameter (ID), and column length (L). The choice of ID and L must be such that when packed with the 125μm diameter glass beads, the liquid internal volume is 2.1 to 2.3 mL. If L is 152 cm, then ID must be 0.206 cm and the wall thickness must be 0.056cm. Different values for L and ID can be used, as long as the glass bead diameter is 125 μm and the internal liquid volume is between 2.1 and 2.3 mL. Column temperature calibration is performed by using a mixture of NIST Standard Reference Material Linear polyethylene 1475a (1.0mg/ml) and Eicosane (2mg/ml) in ODCB. CEF temperature calibration consists of four steps: (1) Calculating the delay volume defined as the temperature offset between the measured peak elution temperature of Eicosane minus 30.00° C; (2) Subtracting the temperature offset of the elution temperature from CEF raw temperature data. It is noted that this temperature offset is a function of experimental conditions, such as elution temperature, elution flow rate, etc.; (3) Creating a linear calibration line transforming the elution temperature across a range of 30.00° C and 140.00° C so that NIST linear polyethylene 1475a has a peak temperature at 101.0°C, and Eicosane has a peak temperature of 30.0° C; (4) For the soluble fraction measured isothermally at 30° C, the elution temperature is extrapolated linearly by using the elution heating rate of 3° C/min. The reported elution peak temperatures are obtained such that the observed comonomer content calibration curve agrees with those previously reported in U.S. Patent No. 8,372,931.

**TGIC** (High temperature thermal gradient interaction chromatography): A commercial Crystallization Elution Fractionation instrument (CEF) (Polymer Char, Spain) was used to perform the high temperature thermal gradient interaction chromatography (HT-TGIC, or TGIC) measurement (Cong, et al., Macromolecules, 2011, 44 (8), 3062-3072. ). The CEF instrument is equipped with either an IR-4 detector or an IR-5 detector. Graphite has been used as the stationary phase in an HT TGIC column (Freddy, A. Van Damme et al., US8, 476,076; Winniford et al., US 8,318,896.). A single graphite column (250 X 4.6 mm) was used for the separation. Graphite is packed into a column using a dry packing technique followed by a slurry packing technique (Cong et al., EP 2714226B1 and the reference cited). An 8 cm X 0.48 cm (3/16 inch ID) stainless steel column packed with 27 micron glass beads (Catalog# GL01918/20-27um, MO-SCI Specialty Products, LLC, Rolla, MO, USA), was installed in front of the IR detector, in the top oven of the CEF instrument. The experimental parameters were: top oven/transfer line/needle temperature at 150°C, dissolution temperature at 150°C, dissolution stirring setting of 2, pump stabilization time of 15 seconds, a pump flow rate for cleaning the column at 0.500 mL/m, pump flow rate of column loading at 0.300 ml/min, stabilization temperature at 150°C, stabilization time (pre-, prior to load to column ) at 2.0 min, stabilization time (post-, after load to column) at 1.0 min, SF( Soluble Fraction) time at 5.0 min, cooling rate of 3.00°C/min from 150°C to 30°C, flow rate during cooling process of 0.04 ml/min, heating rate of 2.00°C/min from 30°C to 160°C, isothermal time at 160°C for 10 min, elution flow rate of 0.500 mL/min, and an injection loop size of 200 microliters.

The flow rate during cooling process was adjusted according to the length of graphite column such that all polymer fractions must remain on the column at the end of the cooling cycle.

Samples were prepared by the PolymerChar autosampler at 150°C, for 120 minutes, at a concentration of 4.0 mg/ml in ODCB (defined below). Silica gel 40 (particle size 0.2 ~0.5 mm, catalogue number 10181-3, EMD) was dried in a vacuum oven at 160°C, for about two hours, prior to use. 2,6-di-tert-butyl-4-methylphenol (1.6 grams, BHT, catalog number B1378-500G, Sigma-Aldrich) and the silica gel 40 (5.0 grams) were added to two liters of ortho-dichlorobenze (ODCB, 99% anhydrous grade, Sigma-Aldrich). For the CEF instrument equipped with an autosampler with N2 purging capability, Silica gel 40 is packed into two 300 x 7.5 mm GPC size stainless steel columns and the Silica gel 40 columns are installed at the inlet of the pump of the CEF instrument to dry ODCB; and no BHT is added to the mobile phase. This "ODCB containing BHT and silica gel" or ODCB dried with silica gel 40 is now referred to as "ODCB." The TGIC data was processed on a PolymerChar (Spain) "GPC One" software platform. The temperature calibration was performed with a mixture of about 4 to 6 mg Eicosane, 14.0 mg of isotactic homopolymer polypropylene iPP (polydispersity of 3.6 to 4.0, and molecular weight Mw reported as polyethylene equivalent of 150,000 to 190,000, and polydispersity (Mw/Mn) of 3.6 to 4.0, wherein the iPP DSC melting temperature was measured to be 158-159°C (DSC method described herein below). 14.0 mg of homopolymer polyethylene HDPE (zero comonomer content, weight average molecular weight (Mw) reported as polyethylene equivalent as 115,000 to 125,000, and polydispersity of 2.5 to 2.8), in a 10 mL vial filled with 7.0 mL of ODCB. The dissolution time was 2 hours at 160°C.

The calibration process, a solution of eicosane and HDPE, is used. For elution temperatures in the range of 30°C to 150°C, the process consists of the following steps:

1. Extrapolate eluting temperature for each of the isothermal steps during elution according to heating rate (demonstrated in Figure 4). Figure 4 shows extrapolation of the elution temperature for TGIC temperature calibration. The solid line is experimental data. The dashed line is the extrapolation of elution temperature for two isothermal steps .
2. Calculate the delay volume. Shift the temperature (x-axis) corresponding to the IR measurement channel chromatogram (y-axis), so that the Eicosane peak maximum (y-axis) is coincident with the elution temperature at 30.0°C. The delay volume is calculated from the temperature difference (30°C- the actual elution temperature of Eicosane peak maximum) divided by the heating rate of the method, and then multiplied by the elution flow rate.
3. Adjust each recorded elution temperature with this same delay volume adjustment.
4. Linearly scale the heating rate, such that the observed HDPE reference has an elution peak maximum temperature of 150.0°C, while the Eicosane elution peak maximum temperature remains at 30.0°C.

The peak temperature of the polypropylene will be observed within the range of 116.0-117.0°C, which is one of the validations of the calibration method. At least 20 ethylene octene random copolymers have been made with a single site catalyst having, and have the Mw (ethylene equivalent weight average molecular weight,) in the range of 36,000 to 150,000 and polydispersity of 2.0-2.2. The measured elution peak temperature of each ethylene octene copolymer (Tp) and octene content (wt%) of the copolymer follows the correlation specified in Figure 5. Figure 5 is the correlation of elution peak temperature (Tp) of ethylene-octene copolymers made by single site catalysts versus octene wt %. Molecular weight distribution is measured according to the reference (Cong et al., Macromolecule, 2011, 44 (8), 3062-3072). Octene content is measured by 13C NMR according to (Li et al., US 7,608,668 and references cited).
Data processing for polymer samples of TGIC is described below.
A solvent blank (pure solvent injection) was run at the same experimental conditions as the polymer samples. Data processing for polymer samples includes: subtraction of the solvent blank for each detector channel, temperature extrapolation as described in the calibration process, compensation of temperature with the delay volume determined from the calibration process, and adjustment in elution temperature axis to the 30°C and 160°C range as calculated from the heating rate of the calibration.
The chromatogram (measurement channel of the IR-4 detector or the IR-5 detector) was integrated with PolymerChar "GPC One" software. A straight baseline was drawn from the visible difference, when the peak falls to a flat baseline (roughly a zero value in the blank subtracted chromatogram) at high elution temperature and the minimum or flat region of detector signal on the high temperature side of the soluble fraction (SF).
The upper temperature integration limit is established based on the visible difference when the peak falls to the flat baseline region (roughly a zero value in the blank subtracted chromatogram). The lower temperature integration limit is established based on the intersection point of baseline with the chromatogram including the soluble fraction.
The soluble fraction (SF) is defined as the weight percentage of the material eluting including and below 34.0°C

$$Materials\ eluting\ as\ soluble\ fraction\% =$$

$$100X\,\frac{\int_{lower\ temperature\ intergation\ limit}^{34.0} IR\text{-}4dT}{\int_{lower\ temperature\ intergation\ limit}^{Upper\ temperature\ intergation\ limit} IR\text{-}4dT}$$

DSC method used to measure melting temperature of homopolymer polypropylene specified in HT-TGIC:
Melting point is determined using a differential scanning calorimeter (DSC). The temperature at the maximum heat flow rate with respect to a linear baseline was used as the melting point. The linear baseline was constructed from the beginning of the melting (above the glass transition temperature) and to the end of the melting. The temperature was raised from room temperature to 200°C at 10°C/min, maintained at 200°C for 5 min, decreased to 0°C at 10°C/min, maintained at 0°C for 5 min and then the temperature was raised from 0°C to 200°C at 10°C/min, and the data are taken from this second heating cycle.

*Working Examples*

The following examples illustrate embodiments of the present disclosure More specifically, the following, non-limiting examples demonstrate inventive CSA and dual catalyst combinations capable of producing olefin block copolymers having desirable properties with commercially acceptable catalyst efficiency and process control at elevated reactor temperatures (e.g., equal to or greater than 125 °C). As seen below, a comparative CSA and dual catalyst combination representative of the state of the art is unable to produce olefin block copolymers meeting desirable product specifications and catalyst efficiency at elevated reactor temperatures (e.g., above 125 °C).

## Procatalyst Components

An exemplary, non-limiting procatalyst falling within the scope of the first olefin polymerization procatalyst (A) of the present disclosure (Procatalyst (A4)) has the structure shown below:

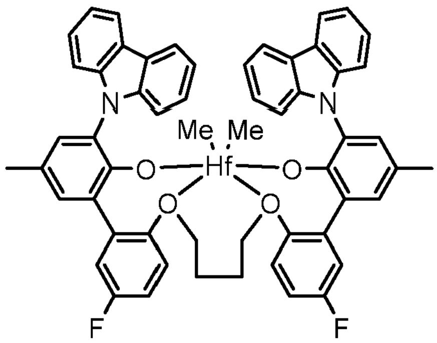

**(A4).**

An exemplary, non-limiting procatalyst falling within the scope of the second olefin polymerization procatalyst (B) of the present disclosure (Procatalyst (R)) has the following structure:

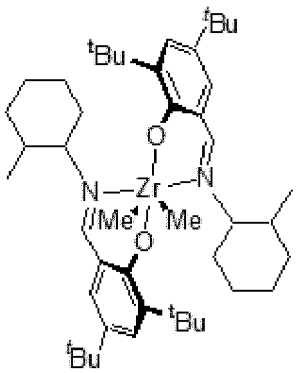

**(R).**

A procatalyst of the comparative CSA and dual catalyst combination representative of the state of the art (Procatalyst (A1)) has the following structure:

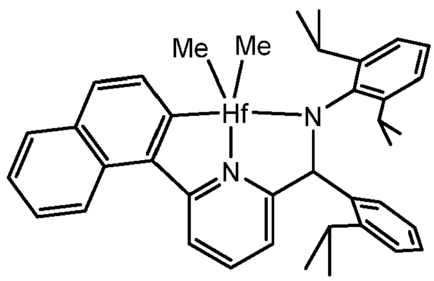

**(A1).**

## Synthesis of Procatalyst (A4)

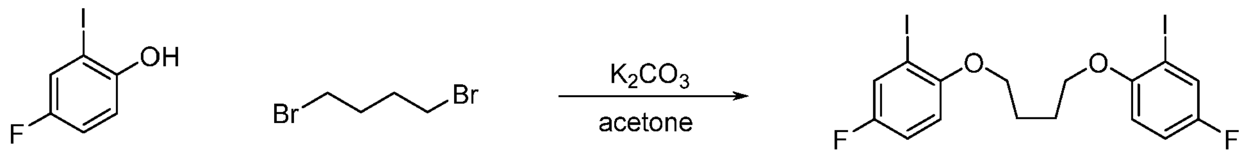

2-iodo-4-fluorophenol (14.2 g, 59.6 mmol) and 1,4-dibromobutane (3.6 mL 30 mmol) are combined in acetone (200 mL) and stirred at reflux over 3 days. The mixture is cooled, filtered and concentrated under vacuum. The residue is dissolved in dichloromethane (150 mL) and washed with KOH (50 mL, 3 N) and saturated $K_2CO_3$ (2 × 50 mL). The organic fraction is then dried over $MgSO_4$ and concentrated to yield a white powder. The white powder is rinsed and sonicated in hexanes, cooled, filtered, and dried under vacuum to yield the desired product (12.22 g, 77.3 %).$^1$H NMR (400 MHz, $CDCl_3$) δ 7.49 (dd, J = 7.7, 3.1 Hz, 2H), 7.01 (td, J = 8.4, 3.1 Hz, 2H), 6.74 (dd, J = 9.0, 4.6 Hz, 2H), 4.08 (d, J = 5.3 Hz, 4H), 2.16 - 2.01 (m, 4H).

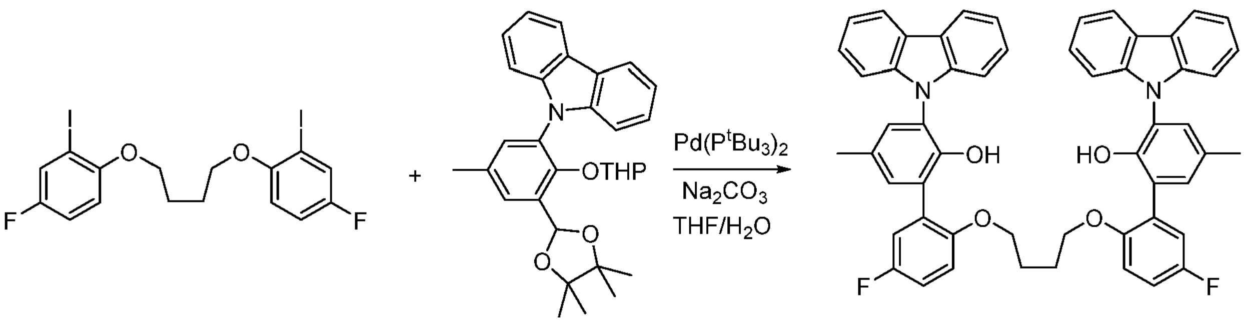


The bis(aryl iodide) (10.0 g, 18.9 mmol), boronate ester (18.2 g, 37.7 mmol), THF (200 mL), and a solution of $Na_2CO_3$ (12.0 g, 113 mmol) in water (50 mL) are placed in a 500 mL 2-neck flask and are purged with nitrogen for 15 minutes. The palladium catalyst is added to a solution in THF. The reaction is heated to 65 °C and stirred overnight. The desired protected product precipitates as a white solid formation over the course of the reaction. The mixture is then cooled, filtered and the white solid is washed with water. The solid is then transferred into a clean flask and suspended in a MeOH/THF mixture. Hydrochloric acid (5 drops) is added to the solution, and the solution is heated to reflux overnight over which time the suspension fully dissolves. The solution is cooled, filtered, and concentrated to yield a brownish oil. The remaining free-flowing liquid is decanted and discarded. The viscous brown oil remaining slowly crystallizes as a brownish solid upon standing in methanol for several days. This solid is collected by filtration, dissolved in dichloromethane and passed through a silica plug (Rf ~ 1 in dichloromethane). The light red solution resulting from elution with dichloromethane is collected and concentrated to yield a red solid which is sonicated with diethyl ether, filtered, and dried to yield the target compound as an off white pinkish solid (14.98 g, 96 %). $^1$H NMR (400 MHz, $CDCl_3$) δ 8.25 - 7.99 (m, 4H), 7.29 (ddd, *J* = 8.2, 7.1, 1.3 Hz, 4H), 7.25 - 7.19 (m, 6H), 7.19 - 7.12 (m, 8H), 7.00 (ddd, *J* = 9.0, 7.7, 3.1 Hz, 2H), 6.72 (dd, *J* = 9.0, 4.5 Hz, 2H), 6.10 (s, 2H), 3.88 - 3.64 (m, 4H), 2.33 (s, 6H), 1.63 (t, *J* = 3.2 Hz, 4H).

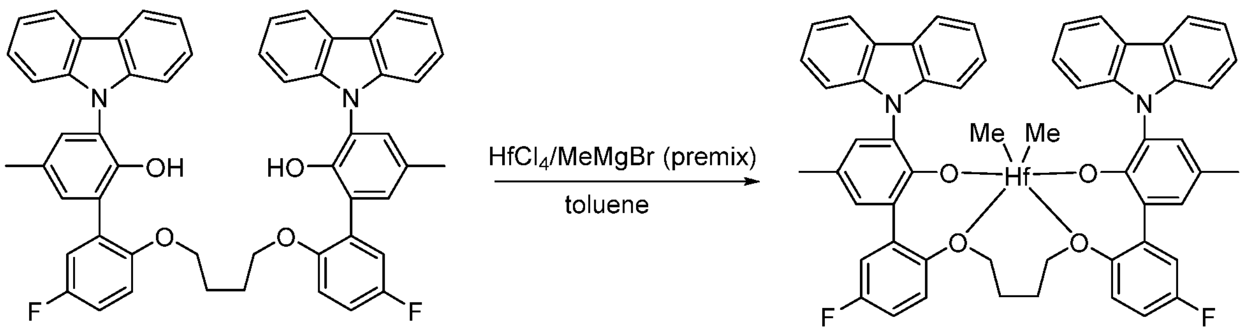


Addition of methyl magnesium bromide (0.812 mL, 3 M, 2.4 mmol) to hafnium tetrachloride (0.195 g, 0.609 mmol) is performed in a toluene (20 mL) suspension at -35 °C. The reaction is stirred warming slightly over 20 minutes. This solution is then transferred to a solution of the ligand in toluene (10 mL). The solution is stirred overnight after which time the solvent is removed under high vacuum. The residue is extracted with dichloromethane (15 mL) and filtered. The dichloromethane is then removed under high vacuum to yield the product as an off white solid (0.325 g, 52%). $^1$H NMR (400 MHz, Benzene-$d_6$) δ 8.19 - 8.11 (m, 2H), 8.05 (dt, J = 7.6, 1.0 Hz, 2H), 7.44 (tt, J = 8.9, 0.9 Hz, 4H), 7.32 (ddd, J = 8.2, 7.1, 1.3 Hz, 2H), 7.28 - 7.20 (m, 4H), 7.21 - 7.09 (m, 5H), 7.09 (dd, J = 2.3, 0.8 Hz, 2H), 7.02 (ddt, J = 7.9, 1.4, 0.7 Hz, 1H), 6.92 (dd, J = 2.3, 0.8 Hz, 2H), 6.82 (dd, J = 9.2, 3.2 Hz, 2H), 6.57 (ddd, J = 9.1, 7.2, 3.2 Hz, 2H), 4.60 (dd, J = 9.1, 4.9 Hz, 2H), 3.89 - 3.68 (m, 2H), 3.21 (dd, J = 11.6, 4.4 Hz, 2H), 2.11 (d, J = 1.4 Hz, 8H), 0.68 - 0.48 (m, 2H), 0.40 (d, J = 13.3 Hz, 2H), -1.17 (s, 6H).

**Synthesis of Procatalyst (A1)** (not within scope of presently claimed invention)

Procatalyst (A1) is synthesized in accordance with the procedures described in U.S. Patent No. 6,953,764 B2.

**Synthesis of Procatalyst (R)**

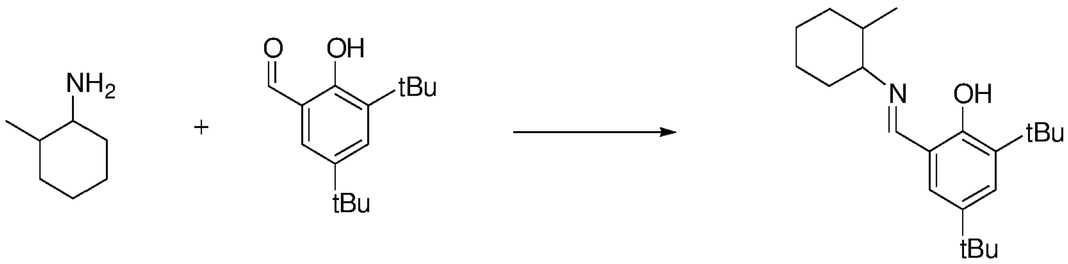

A 20 L carboy is charged with salicylaldehyde (2503.0 g, 10.68 mol) and methanol (12L), and the slurry is tumbled for 20 minutes. The temperature decreases to about 16 °C as the solid dissolves. The amine (1313 g, 11.60 mol) is added in three portions over a period of two hours. The reaction is left to tumble overnight. The bright yellow solid product is collected by filtration and then dried in vacuo in a 12L glass round bottom flask. $^1H$ NMR shows the product is a mixture of ~3:1 trans:cis ratio with about 2.4 mole percent residual MeOH. Yield = 3141 g (89.2%).

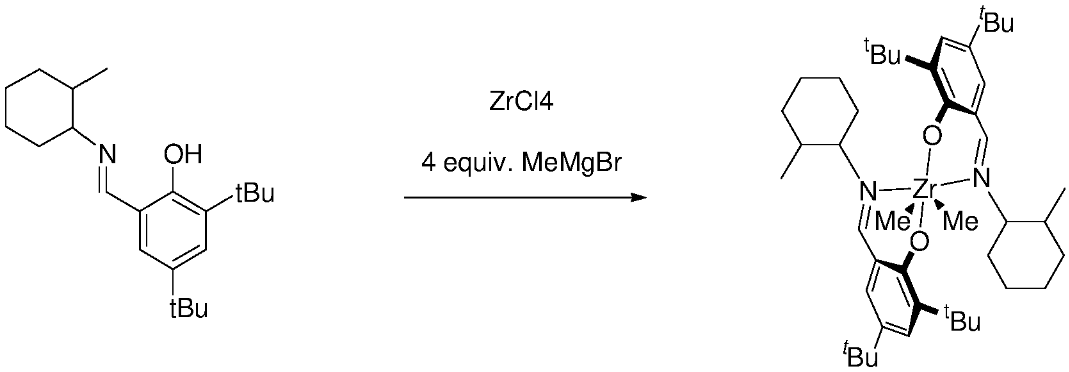


A 5-L three-neck round bottom flask is fitted with an overhead stirrer in a drybox under $N_2$ atmosphere and charged with ligand (393 g, 1.19 mol), zirconium tetrachloride (139 g, 0.597 mmol) and dry toluene (3.5 L). The bright yellow slurry is stirred and 3.0 M methylmagnesium bromide in ether (800 mL, 2400 mmol) is added dropwise over 1 hr. Temperature and methane evolution are monitored carefully during addition of the first two equivalents of the Grignard reagent. After stirring for an additional hour, the ether and toluene are removed under vacuum. The solids are slurried with toluene (4 L) and the magnesium salts are removed on a fritted funnel. The salts are washed with an additional 4 L toluene and the filtrates are combined in a B-5 cylinder. The cylinder is sampled for gravimetric analysis and batch reactor evaluation. Typical concentrations are near 5.4 wt. %, equivalent to ~370 g complex (80% yield).

*Polymerization Examples*

**Continuous Solution Polymerization Procedure**

The exemplary, non-limiting procatalysts described above are used to polymerize olefin block copolymers in continuous stirred polymerizations. The continuous stirred polymerizations are carried out in a 5 L continuously stirred-tank reactor (CSTR) in accordance with the following, non-limiting procedures and with the process conditions of Tables 1-3. The properties of the olefin block copolymers polymerized with the exemplary, non-limiting procatalysts of the present disclosure are presented in Table 4-5.

With reference to the tables, "Cat1" refers to a first olefin polymerization procatalyst (A), "Cat2" refers to a second olefin polymerization procatalyst (B), "CoCat 1" refers to [HNMe(C18H37)2][B(C6F5)4], an exemplary cocatalyst, "CoCat2" refers to TEA, an exemplary cocatalyst, and "CSA" refers to DEZ, an exemplary chain shuttling agent. "(A1)",

"(A4)," and "(R)" refer to Procatalyst (A1), Procatalyst (A4), and Procatalyst (R), respectively.

Raw materials (ethylene, 1-octene) and the process solvent (SBP100/140, commercially available from Shell) are purified with molecular sieves before introduction into the reaction environment. Hydrogen is supplied in pressurized cylinders as a high purity gas. Triethylaluminum (TEA), commercially available from Akzo Nobel, is used as an impurity scavenger. Diethylzinc (DEZ), commercially available from Akzo Nobel, is used as a chain shuttling agent. The individual catalyst components (procatalysts, cocatalyst) are manually batch diluted to specified component concentrations with purified solvent and are added to the reactor under a positive nitrogen pressure. The cocatalyst is [HNMe(C18H37)2][B(C6F5)4], commercially available from Boulder Scientific. All reaction feed flows are controlled with mass flow meters.

The combined solvent, monomer, comonomer and hydrogen are fed to the reactor at a controlled temperatures between 5° C and 30° C. The reactor runs liquid full with the reactor feed (ethylene, 1-octene hydrogen and process solvent) entering the reactor from the bottom and exiting at the top. The reactor is heated with hot oil and normal process pressure is 28 bar. The catalyst is fed to the reactor to reach a specified conversion of ethylene. The cocatalyst is fed separately based on a calculated specified molar ratio (1.2 molar equivalents) to the catalyst component. The TEA and DEZ share the same line as the cocatalyst. TEA flow is based on either an Al concentration in the reactor or a specified molar ratio to the catalyst component. DEZ flow is based on a Zn concentration in the polymer. The effluent from the polymerization reactor (containing solvent, monomer, comonomer, hydrogen, catalyst components, and molten polymer) exits the reactor and water is injected into the stream to terminate polymerization. In addition, various stabilizers or additives such as antioxidants are added at this point. The stream then goes through a static mixer to evenly disperse the catalyst kill and additives. Upon exiting the static mixer, the molten polymer is preheated before it enters the first devolatilizer, where majority of the solvent and non-converted feeds are removed via a flash. The solvent rich polymer is transported through a second preheater in a vacuum devolatilizer where the remaining solvent is removed. The final polymer is pumped through a static mixer to a pelletizer.

**Table 1**

| Ex. | Reacto r Temp. (°C) | Solven t (kg/hr) | C2 (kg/ hr ) | H2 (mL/ min ) | H2 mol % | C8 (kg/ hr ) | C8/olefi n (wt%) | Feed Temp . (°C) | S/E (kg/ kg ) |
|---|---|---|---|---|---|---|---|---|---|
| **C-1** | 125 | 17.28 | 2.28 | 3 | 0.010 | 3.5 | 0.606 | 3 | 9.1 |
| **C-2** | 135 | 17.28 | 2.28 | 0 | 0 | 3.5 | 0.606 | 5 | 9.1 |
| **C-3** | 145 | 17.28 | 2.28 | 0 | 0 | 3.5 | 0.606 | 5 | 9.1 |
| **C-4** | 155 | 17.28 | 2.28 | 0 | 0 | 3.5 | 0.606 | 5.3 | 9.1 |
| **I-1** | 125 | 17.58 | 2.28 | 30 | 0.099 | 3.4 | 0.599 | 4.5 | 9.2 |
| **I-2** | 135 | 17.58 | 2.28 | 25 | 0.082 | 3.4 | 0.599 | 4.5 | 9.2 |
| **I-3** | 145 | 17.38 | 2.3 | 20 | 0.066 | 3.6 | 0.612 | 5 | 9.2 |
| **I-4** | 155 | 17.38 | 2.28 | 17 | 0.056 | 3.6 | 0.612 | 5 | 9.2 |

**Table 2**

| Ex. | Cat1 Type | Cat1 Conc. (mmol/ kg) | Cat1 Flow (g/hr) | Cat2 Type | Cat2 Conc. (mmol /kg) | Cat2 Flow (g/hr) | Combined Cat. Eff. (kg/g) |
|---|---|---|---|---|---|---|---|
| **C-1** | (A1) | 1 | 130 | (R) | 0.4 | 217 | 176 |
| **C-2** | (A1) | 1 | 157 | (R) | 0.4 | 263 | 145 |
| **C-3** | (A1) | 1 | 258 | (R) | 0.4 | 303 | 97 |
| **C-4** | (A1) | 1 | 358 | (R) | 0.4 | 349 | 73 |
| **I-1** | (A4) | 0.2 | 92 | (R) | 0.4 | 138 | 1033 |
| **I-2** | (A4) | 0.2 | 160 | (R) | 0.4 | 240 | 594 |
| **I-3** | (A4) | 0.2 | 195 | (R) | 0.4 | 292 | 488 |
| **I-4** | (A4) | 0.2 | 282 | (R) | 0.4 | 315 | 344 |

**Table 3**

| Ex. | Catalyst ratio | CoCat1 Conc. (mmol/ kg) | CoCat1 Flow (g/hr) | CoCat2 Conc. (mmol/ kg) | CoCat2 Flow (g/hr) | CSA Conc. (ppm) | C2 Conv. (%) | Exit [C2] (g/L) | Solids (%) | Cat. (R) (mol%) |
|---|---|---|---|---|---|---|---|---|---|---|
| **C-1** | 0.4 | 1.2 | 172 | 50/6 | 160 | 150 | 89 | 6 | ~15 | 0.40 |
| **C-2** | 0.4 | 1.2 | 263 | 50/6 | 160 | 150 | 88.5 | 6.4 | ~15 | 0.40 |
| **C-3** | 0.32 | 1.2 | 379 | 50/6 | 160 | 150 | 89.6 | 5.7 | ~15 | 0.32 |
| **C-4** | 0.28 | 1.2 | 595 | 50/6 | 160 | 150 | 89.6 | 5.9 | ~15 | 0.28 |
| **I-1** | 0.75 | 0.44 | 201 | 50/6 | 160 | 150 | 88.8 | 6 | ~15 | 0.75 |
| **I-2** | 0.75 | 0.44 | 348 | 50/6 | 160 | 150 | 88.8 | 6 | ~15 | 0.75 |
| **I-3** | 0.75 | 0.44 | 390 | 50/6 | 160 | 150 | 89 | 6 | ~15 | 0.75 |
| **I-4** | 0.69 | 0.6 | 360 | 50/6 | 160 | 150 | 89.4 | 6.2 | ~15 | 0.69 |

**Table 4**

| | Ex. | C-1 | C-2 | C-3 | C-4 | I-1 | I-2 | I-3 | I-4 |
|---|---|---|---|---|---|---|---|---|---|
| **ASTM D792** | **Density, g/cc** | 0.868 | 0.872 | 0.866 | 0.865 | 0.868 | 0.869 | 0.871 | 0.866 |
| **ASTM D1238** | **I2, 190 °C, dg/min** | 0.50 | 0.66 | 2.02 | 5.03 | 0.70 | 0.57 | 0.49 | 0.38 |
| **GPC** | **Mn, g/mol** | 59,023 | 48,152 | 32,643 | 22,527 | 50,009 | 51,289 | 50,022 | 52,562 |
| | **Mw, g/mol** | 159,208 | 138,788 | 106,342 | 83,443 | 146,491 | 149,906 | 152,293 | 154,827 |
| | **Mw/Mn** | 2.70 | 2.88 | 3.26 | 3.70 | 2.93 | 2.92 | 3.04 | 2.95 |
| **DSC** | **Tm, °C** | 116.7 | 117.1 | 117.9 | 118.8 | 122.0 | 121.7 | 120.9 | 120.4 |
| | **Tg, °C** | -61.7 | -61.1 | -60.2 | -59.8 | -58.0 | -57.7 | -58.6 | -58.1 |
| | **Tc, °C** | 92.5 | 94.6 | 88.3 | 88.5 | 99.2 | 98.6 | 98.6 | 95.0 |

**Table 5**

| | Ex. | C-1 | C-2 | C-3 | C-4 | I-1 | I-2 | I-3 | I-4 |
|---|---|---|---|---|---|---|---|---|---|
| Tear Strength | $lb_f$/in | 162 | 179 | 120 | 91 | 165 | 173 | 176 | 163 |
| TMA, 1 mm penetration | °C | 114 | 115 | 96 | 62 | 108 | 112 | 115 | 109 |

As seen in the examples, ethylene-octene olefin block copolymers are produced with an inventive CSA and dual catalyst combination (comprising Procatalysts (A4) and (R)) and a comparative CSA and dual catalyst combination (comprising Procatalysts (A1) and (R)) at elevated reactor temperatures in the range of 125 to 155 °C. The comparative CSA and dual catalyst combination (examples C-1 through C-4) is representative of the state of the art.

As seen in the examples, OBC resins can be produced at elevated temperatures (up to 155 °C) at significantly higher overall catalyst efficiency with the inventive CSA and dual catalyst combination compared to the comparative CSA and dual catalyst combination. In addition, the target melt index of 0.5 dg/min (2.16 kg, 190 °C) could not be produced at 135 °C and above with the comparative CSA and dual catalyst combination. In contrast, the inventive CSA and dual catalyst combination allowed OBC resins of around 0.5 MI to be produced even at 155 °C with significant hydrogen to spare.

Moreover, the physical properties of the OBC resins produced by the inventive CSA and dual catalyst combination across the entire 125 to 155 °C temperature range are comparable to the physical properties of the comparative CSA and dual catalyst combination at 125 °C. Specifically, as seen in inventive examples I-1 to I-4, the OBC resins produced by the inventive CSA and dual catalyst combination maintained molecular weight, MWD, tear strength, and thermal-mechanical resistance as measured by TMA across all reactor temperatures. In contrast, tear strength and thermal-mechanical resistance as measured by TMA of the OBC resins produced by the comparative CSA and dual catalyst combination could not be maintained as the reactor temperature increased.

Accordingly, the inventive CSA and dual catalyst combination (where the novel procatalyst pairs fall within the scope of the combination of the first olefin polymerization procatalyst (A) and the second olefin polymerization procatalyst (B) as defined in the present disclosure) are able to produce olefin block copolymer resins having desirable properties (e.g., desirable melt index and narrow PDI) with good catalyst efficiency at elevated reactor tempreatures as high as 155° C. Such an elevated reactor temperature increases production rate and decreases energy consumption. This is surprising and unexpected, as the state of the art has not demonstrated a CSA and dual catalyst combination capable of producing olefin block copolymers having desirable properties with commericaly acceptable catalyst efficiency and process control at such an elevated reactor temperature.

FIGS. 2-3 provide further support for the data shown above. As seen in the TGIC of FIG. 2, the OBC resins of the inventive CSA and dual catalyst combination maintain a similar fraction of resin eluted at high temperature (> ca. 110 °C) across the 125 to 155 °C reactor temperature range. This fraction that elutes at a temperature > ca. 110 °C contains polymer chains with hard block segments long enough to be retained on the column at elevated temperature. In the comparative examples, the high temperature elution fraction decreases with increasing reactor temperature, indicating less of the polymer chains in the resins have enough hard block segments to be retained on the column at elevated temperature. Similarly, as seen in the CEF of FIG. 3, the inventive CSA and dual catalyst combination maintain the crystallize-able fraction that elutes at high temperature (> ca. 70 °C) across the 125 to 155 °C reactor temperature range. This fraction that elutes at high temperature contains hard blocks that are able to crystallize from dilute solution at remain on the column until elevated temperature.

In addition, the reactivity ratio ($r_{1A}$) of procatalyst (A4) was determined to be 8.83, while the reactivity ratio ($r_{1B}$) of procatalyst (R) was determined to be 241. Accordingly, the ratio of the reactivity ratios of an inventive dual catalyst combination of procatalysts (A4) and (R) is less than 0.5.

## Claims

1. An olefin polymerization catalyst system comprising an admixture or reaction product resulting from combining:

   (A) a first olefin polymerization procatalyst,
   (B) a second olefin polymerization procatalyst, and
   (C) a chain shuttling agent,

   wherein the first olefin polymerization procatalyst (A) is selected from the group consisting of:

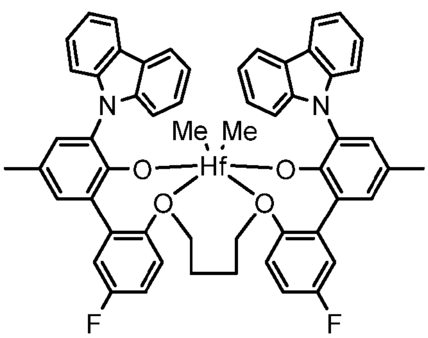
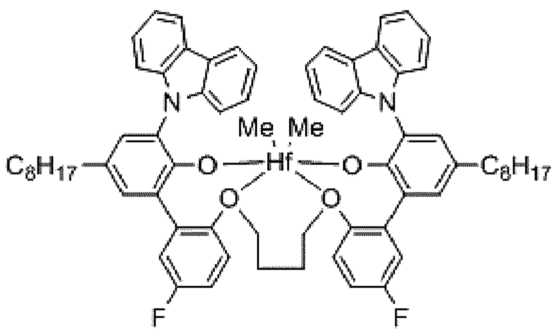

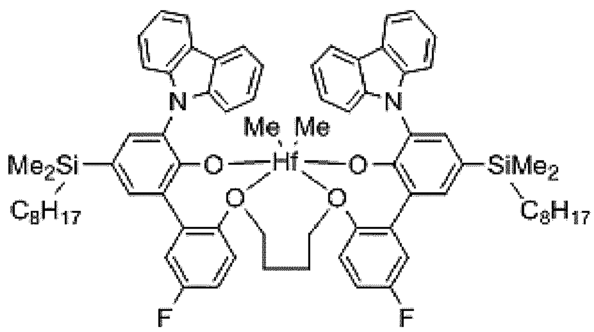

;

and

wherein the second olefin polymerization procatalyst (B) comprises a metal-ligand complex of Formula (II):

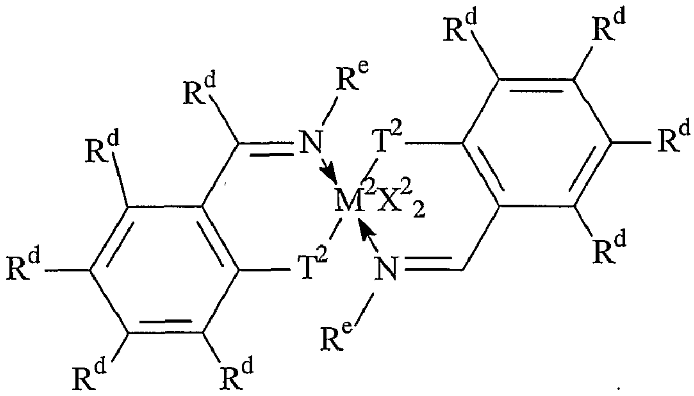

(II),

wherein:

$M^2$ is a Group 4 metal;
$T^2$ is a nitrogen, oxygen or phosphorus containing group;
$X^2$ is halo, hydrocarbyl, or hydrocarbyloxy;
$R^d$ independently at each occurrence is hydrogen, halogen, or $R^e$; and
$R^e$ independently at each occurrence is C1-20 hydrocarbyl or a heteroatom.

**2.** The catalyst system of claim 1, further comprising (D) an activator.

**3.** The catalyst system of claim 1 or 2, wherein $R^e$ independently at each occurrence is a F, N, S or P- substituted derivative thereof.

**4.** The catalyst system of any of the preceding claims, wherein $R^e$ independently at each occurrence is C1-20 hydrocarbyl or a F or N substituted derivative thereof.

**5.** The catalyst system of any of the preceding claims, wherein $R^e$ independently at each occurrence is alkyl, dialkylaminoalkyl, pyrrolyl, piperidenyl, perfluorophenyl, cycloalkyl, (poly)alkylaryl, or aralkyl.

**6.** The catalyst system of any of the preceding claims, wherein the first olefin polymerization procatalyst (A) and the second olefin polymerization procatalyst (B) have respective reactivity ratios $r_{1A}$ and $r_{1B}$, such that the ratio ($r_{1A}/r_{1B}$) under polymerization conditions is 0.5 or less.

**7.** The catalyst system of any of the preceding claims, wherein the second olefin polymerization procatalyst (B) is an aromatic dioxyimine complex of zirconium, corresponding to the formula:

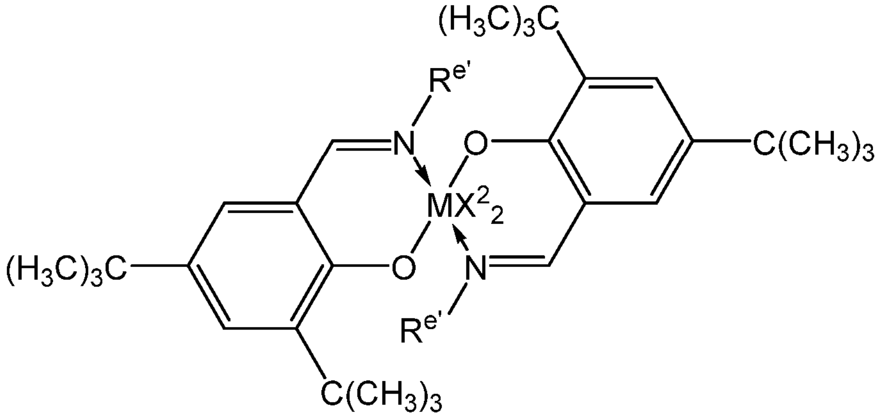

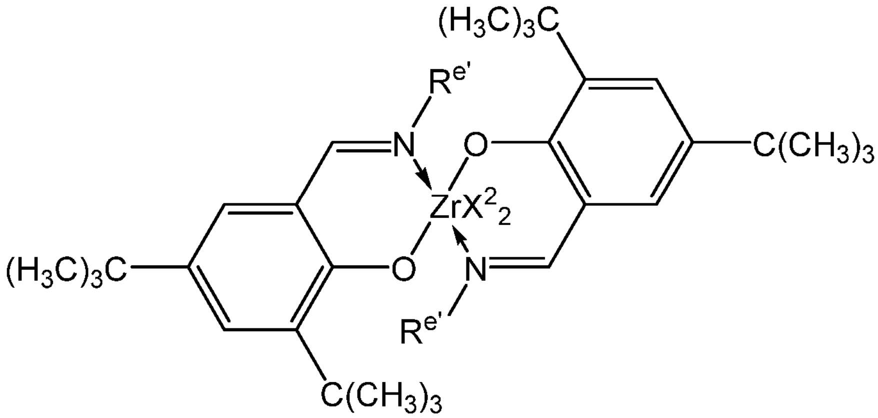

wherein $X^2$ is a C1-10 hydrocarbyl; and

$R^{e'}$ is methyl, isopropyl, t-butyl, cyclopentyl, cyclohexyl, 2-metltylcyclohexyl, 2,4-dimethylcyclohexyl, 2-pyrrolyl, N-methyl-2-pyrrolyl, 2-piperidenyl, N-methyl-2-piperidenyl, benzyl, o-tolyl, 2,6-dimethylphenyl, perfluorophenyl, 2,6-di(isopropyl)phenyl, or 2,4,6-trimethylphenyl.

**8.** The catalyst system of any of the preceding claims, wherein the second olefin polymerization procatalyst (B) has the following structure:

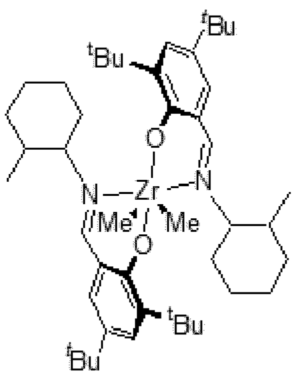

.

**9.** The catalyst system of any of the preceding claims, wherein the chain shuttling agent is an aluminum, zinc, or gallium compound containing at least one hydrocarbyl substituent having from 1 to 12 carbons.

**10.** A process for preparing a multi-block copolymer comprising contacting ethylene and a C3-8 alpha-olefin under addition polymerization conditions with a catalyst system according to any of claims 1-9.

11. The process according to claim 10, wherein the process is a continuous solution process is carried out at a reactor temperature of greater than 125 °C.

12. The process of claim 11, wherein the process further comprises a catalyst efficiency of greater than 200 $kg_{polymer}/g_{metal}$ over a reactor temperature range of 125 °C to 155 °C.

**Patentansprüche**

1. Olefinpolymerisationskatalysatorsystem, umfassend ein Beimischungs- oder Reaktionsprodukt, resultierend aus einem Kombinieren von:

(A) einem ersten Olefinpolymerisationsprokatalysator,
(B) einem zweiten Olefinpolymerisationsprokatalysator und
(C) einem Chain-Shuttling-Mittel,
wobei der erste Olefinpolymerisationsprokatalysator (A) ausgewählt ist aus der Gruppe, bestehend aus:

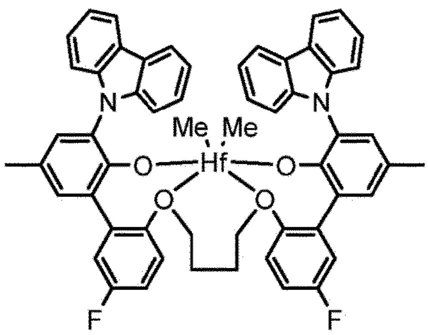

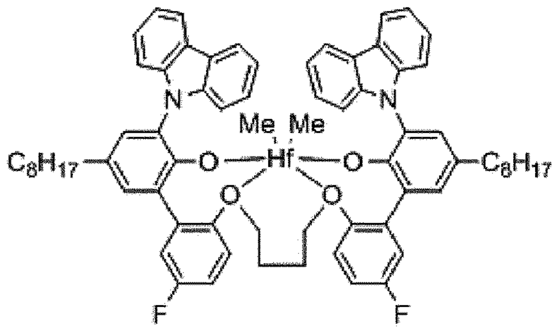

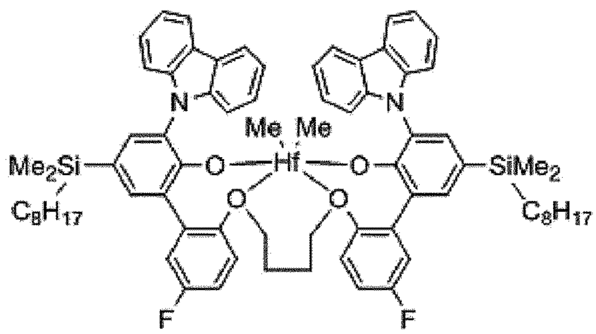

;

und
wobei der zweite Olefinpolymerisationsprokatalysator (B) einen Metall-Liganden-Komplex der Formel (II) umfasst:

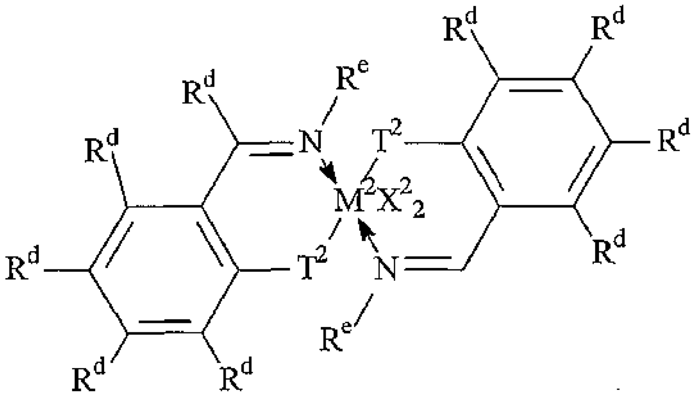

(II),

wobei:

$M^2$ ein Metall der Gruppe 4 ist;
$T^2$ eine stickstoff-, sauerstoff- oder phosphorhaltige Gruppe ist;
$X^2$ Halogen, Hydrocarbyl oder Hydrocarbyloxy ist;
$R^d$ unabhängig bei jedem Auftreten Wasserstoff, Halogen oder $R^e$ ist; und
$R^e$ unabhängig bei jedem Auftreten Cl-20-hydrocarbyl oder ein Heteroatom ist.

2. Katalysatorsystem nach Anspruch 1, ferner umfassend (D) einen Aktivator.

3. Katalysatorsystem nach Anspruch 1 oder 2, wobei $R^e$ unabhängig bei jedem Auftreten ein F-, N-, S- oder P-substituiertes Derivat davon ist.

4. Katalysatorsystem nach einem der vorstehenden Ansprüche, wobei $R^e$ unabhängig bei jedem Auftreten Cl-20-hydrocarbyl oder ein F- oder N-substituiertes Derivat davon ist.

5. Katalysatorsystem nach einem der vorstehenden Ansprüche, wobei $R^e$ unabhängig bei jedem Auftreten Alkyl, Dialkylaminoalkyl, Pyrrolyl, Piperidenyl, Perfluorphenyl, Cycloalkyl, (Poly)alkylaryl oder Aralkyl ist.

6. Katalysatorsystem nach einem der vorstehenden Ansprüche, wobei der erste Olefinpolymerisationsprokatalysator (A) und der zweite Olefinpolymerisationsprokatalysator (B) jeweilige Reaktivitätsverhältnisse $r_{1A}$ und $r_{1B}$ aufweisen, derart, dass das Verhältnis $(r_{1A} / r_{1B})$ unter Polymerisationsbedingungen 0,5 oder weniger beträgt.

7. Katalysatorsystem nach einem der vorstehenden Ansprüche, wobei der zweite Olefinpolymerisationsprokatalysator (B) ein aromatischer Dioxyimin-Komplex von Zirkonium ist, entsprechend der Formel:

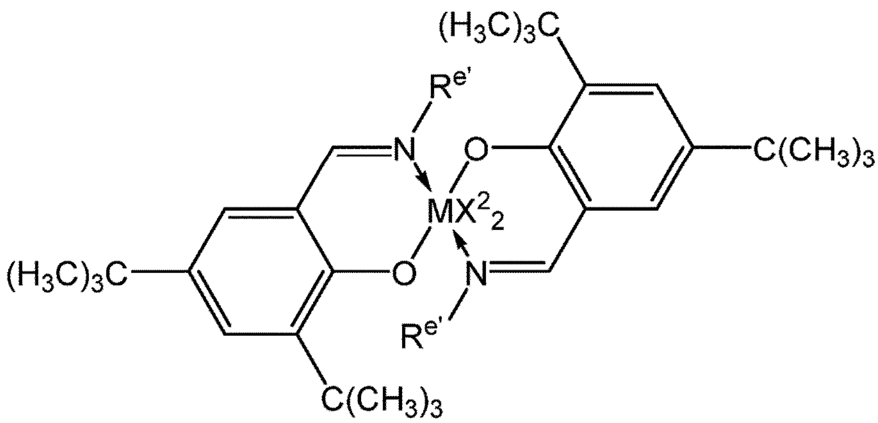

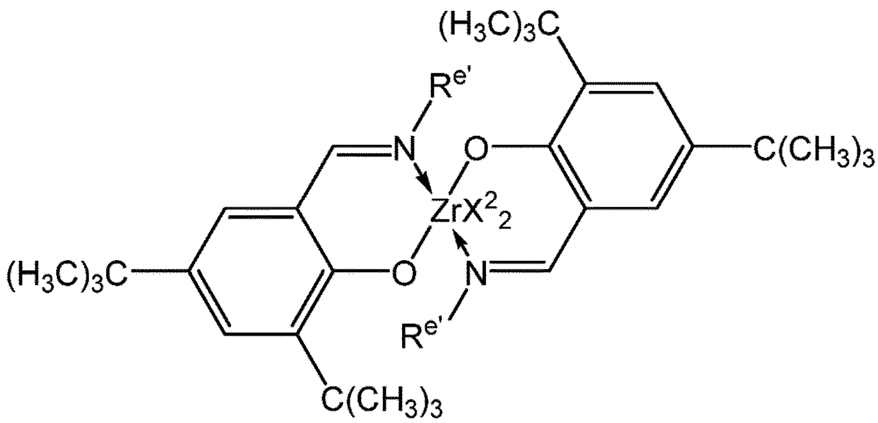

wobei $X^2$ ein Cl-10-hydrocarbyl ist; und
$R^{e'}$ Methyl, Isopropyl, t-Butyl, Cyclopentyl, Cyclohexyl, 2-Methylcyclohexyl, 2,4-Dimethylcyclohexyl, 2-Pyrrolyl, n-Methyl-2-pyrrolyl, 2-Piperidenyl, n-Methyl-2-piperidenyl, Benzyl, o-Tolyl, 2,6-Dimethylphenyl, Perfluorphenyl, 2,6-Di(isopropyl)phenyl oder 2,4,6-Trimethylphenyl ist.

**8.** Katalysatorsystem nach einem der vorstehenden Ansprüche, wobei der zweite Olefinpolymerisationsprokatalysator (B) die folgende Struktur aufweist:

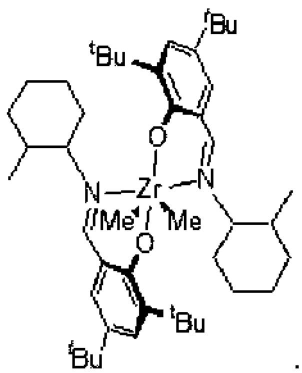
.

**9.** Katalysatorsystem nach einem der vorstehenden Ansprüche, wobei das Chain-Shuttling-Mittel eine Aluminium-, Zink- oder Galliumverbindung ist, die mindestens einen Hydrocarbylsubstituenten enthält, der 1 bis 12 Kohlenstoffatome aufweist.

**10.** Verfahren zum Herstellen eines Multiblockcopolymers, umfassend das Inberührungbringen von Ethylen und einem C3-8-alpha-Olefin unter Additionspolymerisationsbedingungen mit einem Katalysatorsystem nach einem der Ansprüche 1 bis 9.

**11.** Verfahren nach Anspruch 10, wobei das Verfahren ein kontinuierliches Lösungsverfahren ist, das bei einer Reaktortemperatur von mehr als 125 °C ausgeführt wird.

**12.** Verfahren nach Anspruch 11, wobei das Verfahren ferner eine Katalysatoreffizienz von mehr als 200 $kg_{Polymer}/g_{Metall}$ über einen Reaktortemperaturbereich von 125 °C bis 155 °C umfasst.

**Revendications**

**1.** Système de catalyseur de polymérisation d’oléfine comprenant un mélange ou un produit de réaction résultant de la combinaison :

(A) d’un premier procatalyseur de polymérisation d’oléfine,
(B) d’un second procatalyseur de polymérisation d’oléfine, et

(C) d'un agent de brassage de chaîne,

le premier procatalyseur de polymérisation d'oléfine (A) étant choisi dans le groupe constitué de :

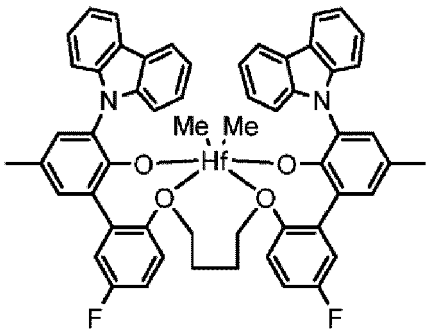

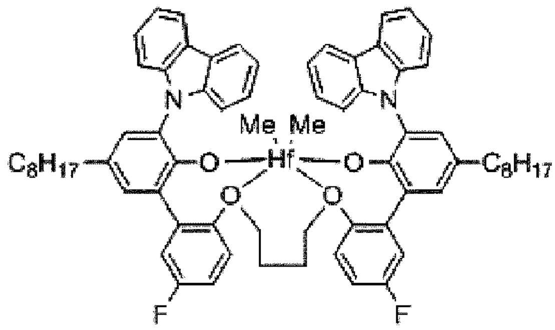

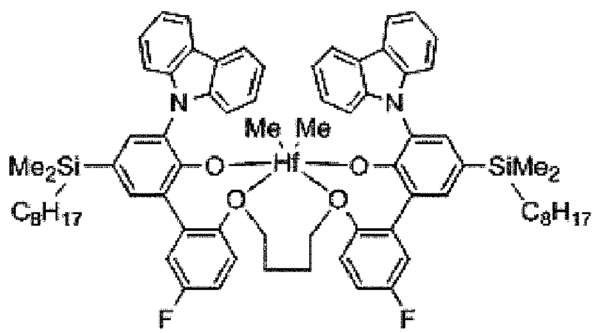

;

et

le second procatalyseur de polymérisation d'oléfine (B) comprenant un complexe métal-ligand de formule (II) :

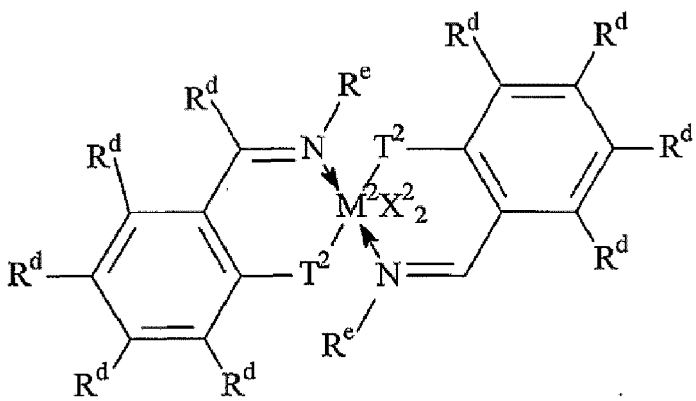

(II) :

$M^2$ étant un métal du groupe 4 ;

$T^2$ étant un groupe contenant de l'azote, de l'oxygène ou du phosphore ;

$X^2$ étant halo, hydrocarbyle ou hydrocarbyloxy ;

$R^d$ indépendamment à chaque occurrence étant hydrogène, halogène ou $R^e$ ; et

$R^e$ indépendamment à chaque occurrence étant C1-20 hydrocarbyle ou un hétéroatome.

**2.** Système de catalyseur selon la revendication 1, comprenant en outre (D) un activateur.

**3.** Système de catalyseur selon la revendication 1 ou 2, dans lequel $R^e$ indépendamment à chaque occurrence est un dérivé substitué F, N, S ou P de celui-ci.

**4.** Système de catalyseur selon l'une quelconque des revendications précédentes, dans lequel $R^e$ indépendamment

à chaque occurrence est C1-20 hydrocarbyle ou un dérivé substitué F ou N de celui-ci.

**5.** Système de catalyseur selon l'une quelconque des revendications précédentes, dans lequel $R^e$ indépendamment à chaque occurrence est alkyle, dialkylaminoalkyle, pyrrolyle, pipérazinyle, perfluorophényle, cycloalkyle, (poly)alkylaryle ou aralkyle.

**6.** Système de catalyseur selon l'une quelconque des revendications précédentes, dans lequel le premier procatalyseur de polymérisation d'oléfine (A) et le second procatalyseur de polymérisation d'oléfine (B) ont des rapports de réactivité respectifs $r_{1A}$ et $r_{1B}$.de telle sorte que le rapport $(r_{1A}/r_{1B})$, dans des conditions de polymérisation, est de 0,5 ou moins.

**7.** Système de catalyseur selon l'une quelconque des revendications précédentes, dans lequel le second procatalyseur de polymérisation d'oléfine (B) est un complexe dioxyimine aromatique de zirconium, correspondant à la formule :

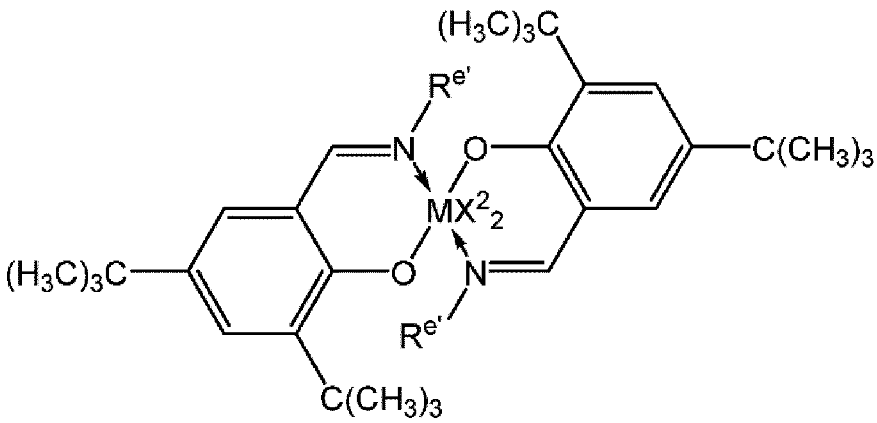

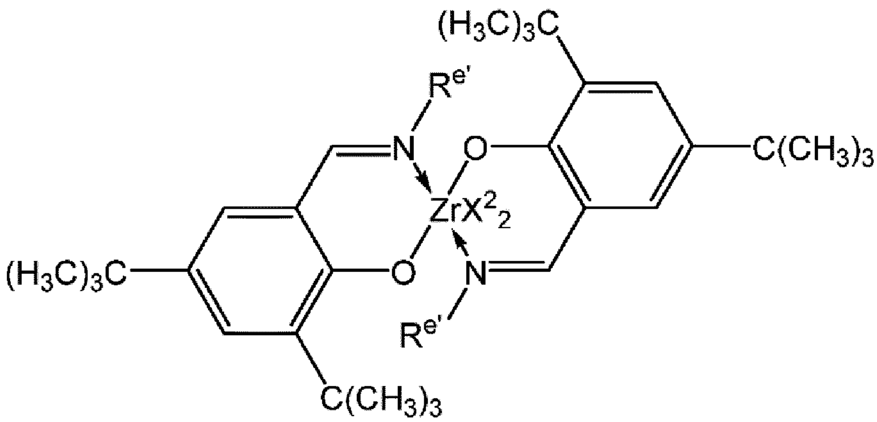

$X^2$ étant un C1-10 hydrocarbyle ; et

$R^e$ étant méthyle, isopropyle, t-butyle, cyclopentyle, cyclohexyle, 2-méthylcyclohexyle, 2,4-diméthylcyclohexyle, 2-pyrrolyle, N-méthyl-2-pyrrolyle, 2-pipérazineyle, N-méthyl-2-pipéridentique, benzyle, o-tolyle, 2,6-diméthylphényle, perfluorophényle, 2,6-di (isopropyl) phényle ou 2,4,6- triméthylphényle.

**8.** Système de catalyseur selon l'une quelconque des revendications précédentes, dans lequel le second procatalyseur de polymérisation d'oléfine (B) a la structure suivante :

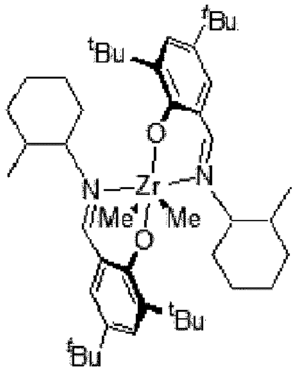

**9.** Système de catalyseur selon l'une quelconque des revendications précédentes, dans lequel l'agent de transfert de chaînes est un composé d'aluminium, de zinc ou de gallium contenant au moins un substituant hydrocarbyle ayant de 1 à 12 carbones.

**10.** Procédé de préparation d'un copolymère à blocs multiples comprenant la mise en contact de l'éthylène et d'une alpha-oléfine en C3-8 dans des conditions de polymérisation par addition avec un système catalytique selon l'une quelconque des revendications 1 à 9.

**11.** Procédé selon la revendication 10, dans lequel le procédé est un procédé de solution continue et est réalisé à une température de réacteur supérieure à 125 °C.

**12.** Procédé selon la revendication 11, dans lequel le procédé comprend en outre une efficacité de catalyseur supérieure à 200 $kg_{polymère}/g_{métal}$ sur une plage de température de réacteur de 125 °C à 155 °C.

FIG. 1

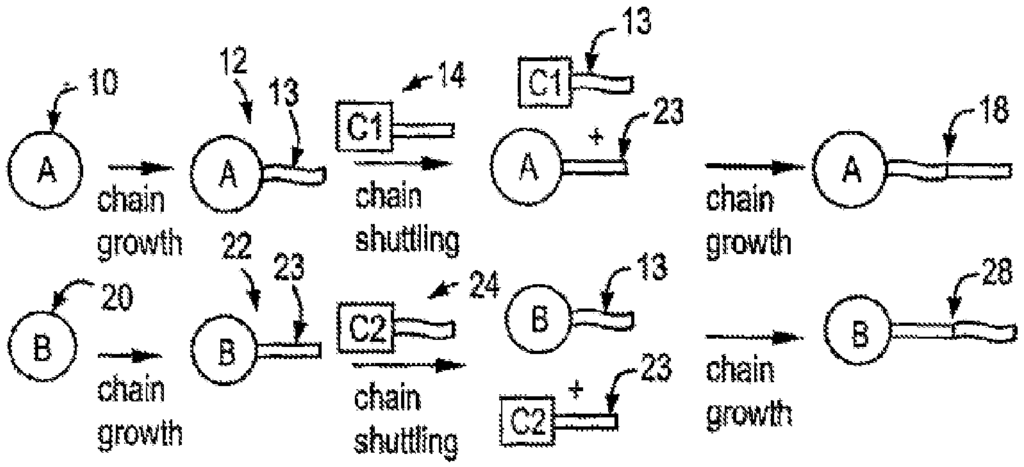
A
10
chain
growth
A
12
13
C1
14
chain
shuttling
C1
13
A
+
23
chain
growth
A
18
B
20
chain
growth
B
22
23
C2
24
chain
shuttling
B
13
C2
+
23
chain
growth
B
28

FIG. 2A

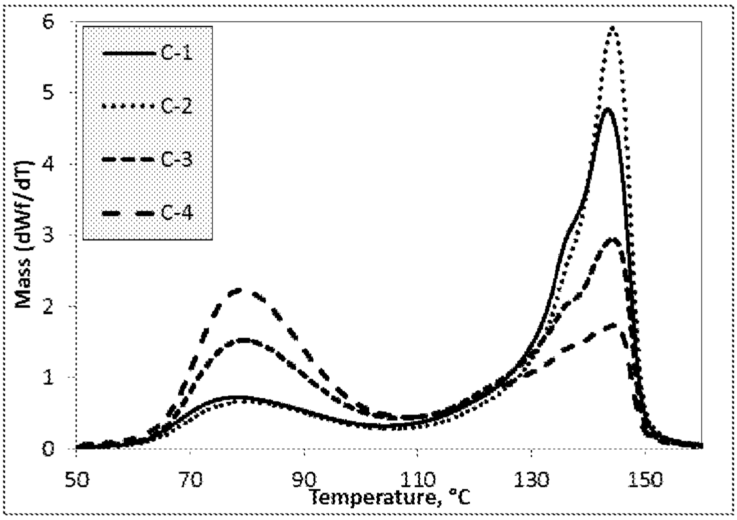
C-1
C-2
C-3
C-4
Mass (dWf/dT)
0
1
2
3
4
5
6
50
70
90
110
130
150
Temperature, °C

FIG. 2B

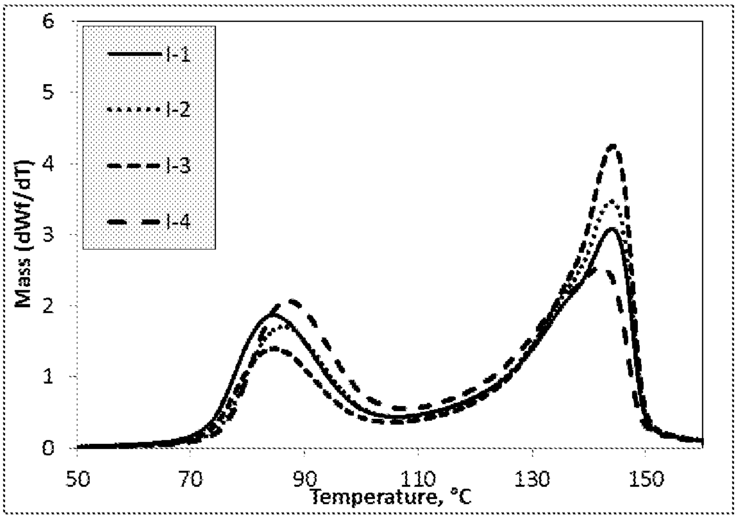
I-1
I-2
I-3
I-4
Mass (dWf/dT)
0
1
2
3
4
5
6
50
70
90
110
130
150
Temperature, °C

FIG. 3A

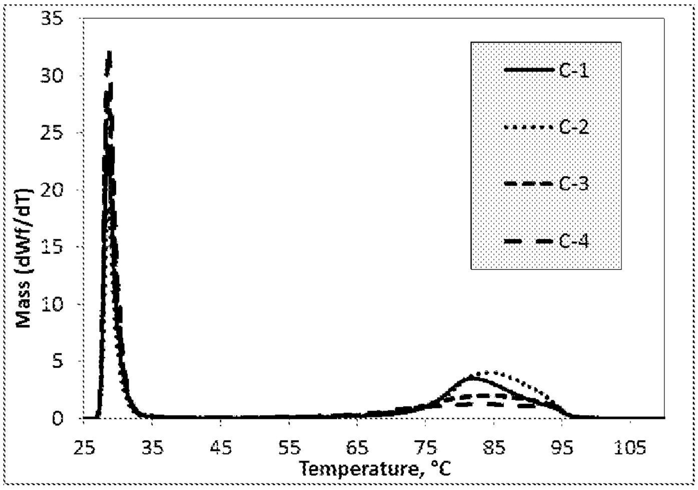
Mass (dWf/dT)
Temperature, °C
C-1
C-2
C-3
C-4
0
5
10
15
20
25
30
35
25
35
45
55
65
75
85
95
105

FIG. 3B

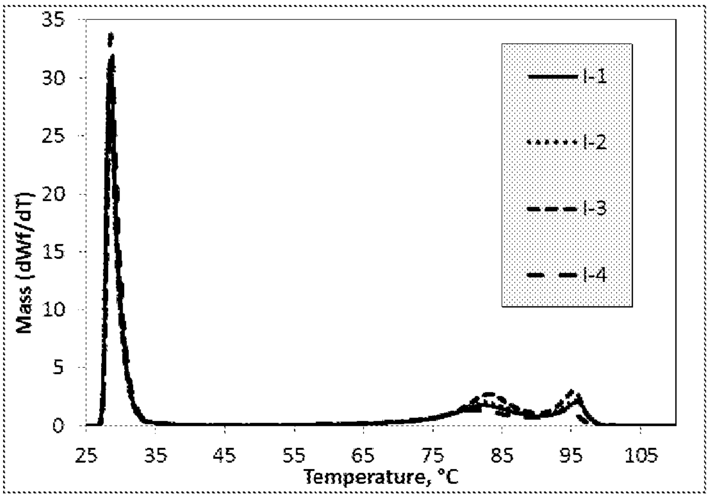
Mass (dWf/dT)
Temperature, °C
I-1
I-2
I-3
I-4
0
5
10
15
20
25
30
35
25
35
45
55
65
75
85
95
105

FIG. 4

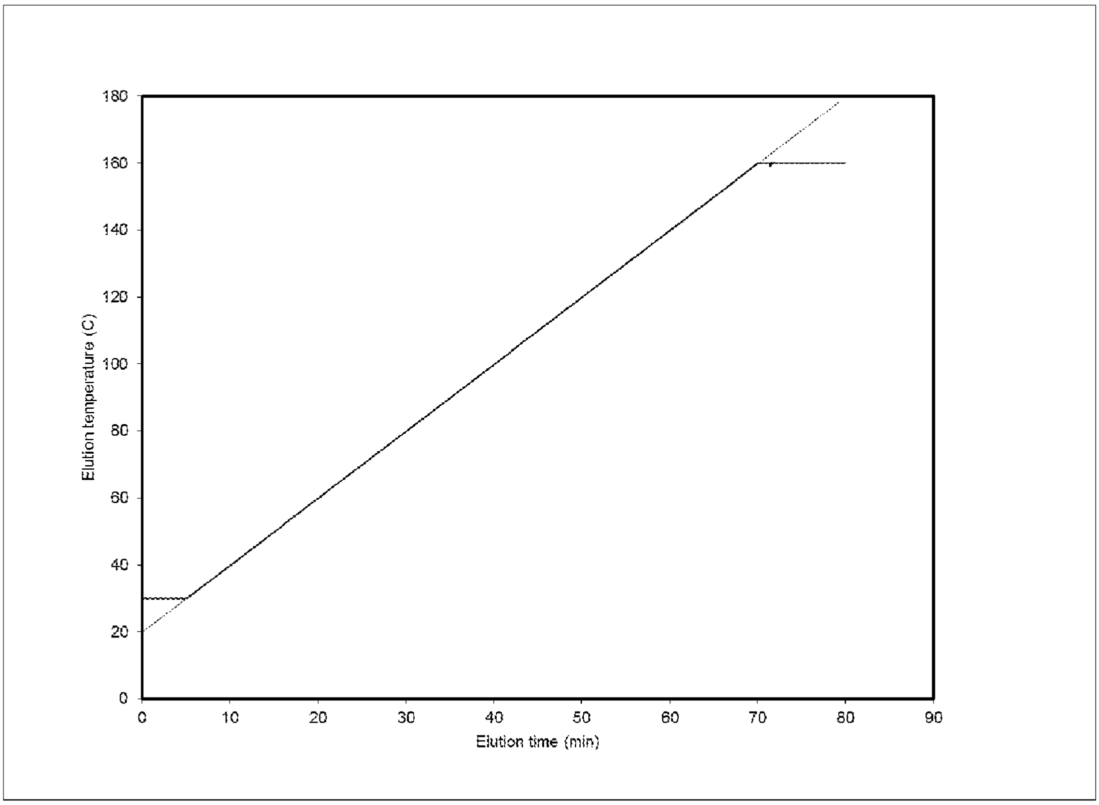
Elution temperature (C)
180
160
140
120
100
80
60
40
20
0
0
10
20
30
40
50
60
70
80
90
Elution time (min)

FIG. 5

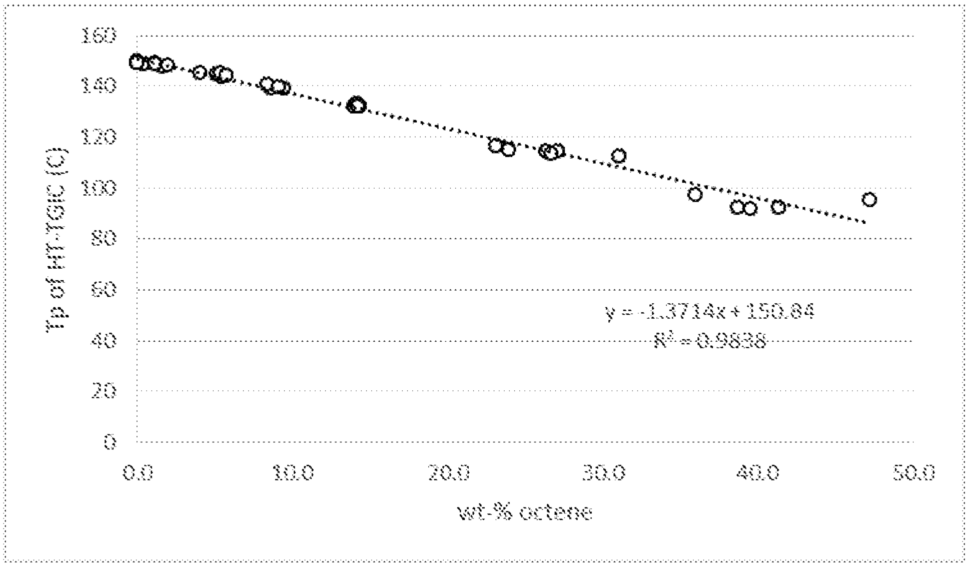


[i] Williams, T. and Ward, I.M. "The Construction of a Polyethylene Calibration Curve for Gel Permeation Chromatography using Polystyrene Fractions," *J. Polym. Sci., Polym. Let.* **1968**, *6*, 621 – 624.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2008311812 A1
- EP 2436703 A1
- WO 2005090426 A
- WO 2005090427 A
- WO 2007035485 A
- WO 2009012215 A
- WO 2014105411 A
- US 20060199930 A
- US 20070167578 A
- US 20080311812 A
- US 7355089 B2
- US 8058373 B2
- US 8785554 B2
- US 8501885 B2
- US 6827976 B
- US 20040010103 A
- US 6320005 B
- US 6103657 A
- WO 0238628 A
- WO 0340195 A
- US 040220050 B
- WO 0424740 A
- WO 2010022228 A
- EP 890581 A
- US 5064802 A
- US 5153157 A
- US 5296433 A
- US 5321106 A
- US 5350723 A
- US 5425872 A
- US 5625087 A
- US 5721185 A
- US 5783512 A
- US 5883204 A
- US 5919983 A
- US 6696379 B
- US 7163907 B
- US 6515155 B1
- EP 89691 A
- US 4543399 A
- WO 9425495 A
- US 5352749 A
- WO 9428032 A
- US 4588790 A
- US 5436304 A
- US 5405922 A
- US 5462999 A
- US 5461123 A
- US 5453471 A
- US 5032562 A
- US 5028670 A
- US 5473028 A
- US 5106804 A
- US 5556238 A
- US 5541270 A
- US 5608019 A
- US 5616661 A
- US 5543458 A
- US 7608668 B
- US 8372931 B
- US 8476076 B, Freddy, A. Van Damme
- US 8318896 B, Winniford
- EP 2714226 B1, Cong


### Non-patent literature cited in the description


- **POTEMKIN.** *Physical Review E,* 1998, vol. 57 (6), 6902-6912
- **DOBRYNIN.** *J. Chem. Phvs.,* 1997, vol. 107 (21), 9234-9238
- **W. H. RAY.** *J. Macromol. Sci., Rev. Macromol. Chem.,* 1972, vol. C8, 1
- **A. E. HAMIELEC ; J. F. MACGREGOR.** Polymer Reaction Engineering. Hanser, 1983
- **GEORGE ODIAN.** Principles of Polymerization. John Wiley and Sons, 1970
- **B. G. KYLE.** Chemical and Process Thermodynamics. Prentice-Hall, 1999
- Redlich-Kwong-Soave (RKS) Equation of State. *Chemical Engineering Science,* 1972, 1197-1203
- **KAMINSKI et al.** *J. Mol. Catal. A: Chemical,* 1995, vol. 102, 59-65
- **ZAMBELLI et al.** *Macromolecules,* 1988, vol. 21, 617-622
- **DIAS et al.** *J. Mol. Catal. A: Chemical,* 2002, vol. 185, 57-64
- **BROOKHART et al.** *J. Am. Chem. Soc.,* 1995, vol. 117, 64145-6415
- *J. Am. Chem. Soc.,* 1996, vol. 118, 267-268
- *J. Am. Chem. Soc.,* 1995, vol. 117, 6414-6415

- *Organometallics,* 1997, vol. 16, 1514-1516
- **NEGISHI.** *Organometallics in Organic Synthesis,* 1980, vol. 1, 2
- *J. Polym. Sci., Polym. Let.,* 1968, vol. 6, 621-624
- **MONRABAL et al.** *Macromol. Symp.,* 2007, vol. 257, 71-79
- **CONG et al.** *Macromolecules,* 2011, vol. 44 (8), 3062-3072
- **CONG et al.** *Macromolecule,* 2011, vol. 44 (8), 3062-3072